# EUROPEAN PATENT APPLICATION

(11) **EP 4 708 945 A1**
(43) Date of publication of application: **11.03.2026**
(21) Application number: 25196283.3
(22) Date of filing: 15.08.2025
(51) Int. Cl.: H04W 12/08, H04L 67/51, H04W 4/02, H04W 12/63

(54) **INFORMATION PROCESSING APPARATUS, CONTROL METHOD, AND PROGRAM**

(30) Priority: 28.08.2024 JP 2024146683
(71) Applicant: Canon Kabushiki Kaisha, Tokyo, 146-8501 (JP)
(72) Inventor: SHINOZUKA, Naoki, Tokyo, 146-8501 (JP); YOSHIMOTO, Yuhei, Tokyo, 146-8501 (JP)
(74) Representative: Canon Europe Limited

(57) **Abstract**

The present disclosure is directed to more appropriate determination of whether the use of position information service is allowed for application programs. The issue is solved by providing a program for causing a computer to function as an instruction means for instructing a second application program different from a first application program to call a predetermined application programming interface (API) for acquiring predetermined information from an operating system (OS) of an information processing apparatus, the predetermined information being acquired by the information processing apparatus using a wireless local area network (LAN) function.

## Description

### BACKGROUND

### Field of the Technology

The present disclosure relates to an information processing apparatus, a control method, and a program.

### Description of the Related Art

For information processing apparatuses such as smartphones, there is known a configuration in which a user allows use of position information service for application programs so that the application programs can use the position information service. Japanese Patent Laid-Open No. 2021-69052 describes allowing an application that performs Wireless Fidelity (Wi-Fi) Direct communication on a mobile terminal to access position information.

As configurations where application programs use position information service become widespread, there is an increasing demand for more appropriate determination of whether the use of position information service is allowed for application programs.

### SUMMARY

The present disclosure is directed to more appropriate determination of whether the use of position information service is allowed for application programs.

According to a first aspect of the present invention, there is provided a program as specified in claims 1 to 13. According to a second aspect of the present invention, there is provided an information processing apparatus as specified in claim 14. According to a third aspect of the present invention, there is provided a control method as specified in claim 15.

Features of the present disclosure will become apparent from the following description of embodiments with reference to the attached drawings. The following description of embodiments is described by way of example.

### BRIEF DESCRIPTION OF THE DRAWINGS

Fig. 1 is a diagram illustrating an example of a communication system.
Fig. 2 is an example of a hardware configuration diagram of a terminal apparatus and a communication apparatus.
Fig. 3 is an example of a setting screen.
Figs. 4A and 4B are a flowchart illustrating an example of processing performed by the terminal apparatus using a predetermined application program (app).
Figs. 5A to 5F illustrate examples of various screens displayed by the terminal apparatus.
Fig. 6 illustrates an example of an inquiry screen.
Fig. 7 is a flowchart illustrating an example of connection setting processing performed by the terminal apparatus using the predetermined app.
Fig. 8 is a flowchart illustrating an example of processing performed by the terminal apparatus using the predetermined app.
Figs. 9A and 9B are a flowchart illustrating the example of the processing performed by the terminal apparatus using the predetermined app.
Figs. 10A and 10B illustrate examples of a guide screen.

### DESCRIPTION OF THE EMBODIMENTS

An information processing apparatus and a communication apparatus included in a communication system according to a first embodiment will be described. The information processing apparatus will also be referred to as a terminal apparatus. In the present embodiment, a personal computer (PC) is described as an example of the information processing apparatus. However, this is not restrictive. For example, various devices such as a smartphone, a tablet terminal, a personal digital assistant (PDA), and a digital camera can be applied as the information processing apparatus. In the present embodiment, a printer is described as an example of the communication apparatus. The printer may be an inkjet printer that performs printing with ink, or a laser beam printer that performs printing with toner. Moreover, the printer may a full color printer capable of color printing, or a monochrome printer capable of monochrome printing but not color printing. The communication apparatus according to the present embodiment is not limited to printers. Any device that can communicate wirelessly with the information processing apparatus is applicable as the communication apparatus. Examples of devices applicable as the communication apparatus include copying machines, facsimile apparatuses, scanners, smartphones, PCs, tablet terminals, PDAs, digital cameras, music player devices, television sets, smart speakers, robot vacuum cleaners, automatic cooking pots, and refrigerators. Multifunction peripherals having a plurality of functions such as a copy function, a facsimile (FAX) function, and a print function are also applicable.

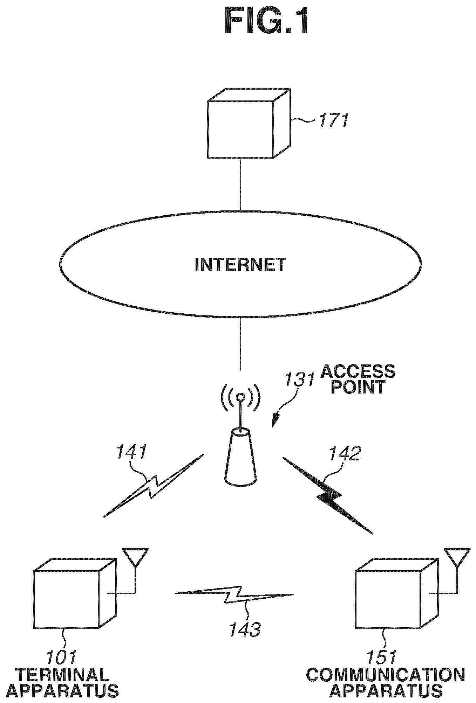

A system configuration for implementing the present embodiment will initially be described. Fig. 1 is a diagram illustrating an example of the configuration of the communication system according to the present embodiment. This communication system includes a communication apparatus 151, a terminal apparatus 101, an access point (AP) 131, and an external server 171.

The terminal apparatus 101 is an information processing apparatus according to the present embodiment. The communication apparatus 151 is a communication apparatus according to the present embodiment. The AP 131 is an AP run by an external apparatus located outside the terminal apparatus 101 and outside the communication apparatus 151. APs have a function of forming networks. In the present embodiment, connection to an AP is thus synonymous with connection to the network formed by the AP. An example of the external apparatus is a wireless local area network (LAN) router. The external server 171 is a server that can provide apparatuses connected to the AP 131 with services via the Internet.

With the communication apparatus 151 and the terminal apparatus 101 connected to the AP 131, the LAN formed by the AP 131 includes the AP 131, the communication apparatus 151, and the terminal apparatus 101. Meanwhile, a wide area network (WAN) includes the AP 131 and the external server 171.

In the present embodiment, when there is established an infrastructure connection to be described below, the terminal apparatus 101 can communicate with the communication apparatus 151 via the AP 131. When there is established a direct connection to be described below, the terminal apparatus 101 can communicate directly with the communication apparatus 151 without the intermediary of the AP 131. In the following description, the connection to the AP 131 is equivalent to the connection to the network formed by the AP 131. One external apparatus may run a plurality of APs, and the one external apparatus may be able to form a plurality of networks at the same time.

In the present embodiment, a connection 141 between the terminal apparatus 101 and the AP 131 and a connection 142 between the communication apparatus 151 and the AP 131 shall be connections using a communication method based on the Institute of Electrical and Electronics Engineers (IEEE) 802.11 series standards. Specifically, the communication method based on the IEEE 802.11 series standards refers to Wireless Fidelity (Wi-Fi) (registered trademark). A connection 143 between the terminal apparatus 101 and the communication apparatus 151 is also a connection based on the communication method based on the IEEE 802.11 series standards. However, the communication method used for the connection 143 is not limited thereto. For example, Bluetooth^{®} Low Energy, Bluetooth^{®} Classic, Wi-Fi Aware, and near field communication (NFC) may be used. The AP 131 and the external server 171 can communicate via the Internet. With the AP 131 connected to the Internet, the apparatuses connected to the AP 131 (terminal apparatus 101 and communication apparatus 151) can also access the Internet. The connection 141 between the terminal apparatus 101 and the AP 131 and the connection 142 between the communication apparatus 151 and the AP 131 may be wired LAN connections.

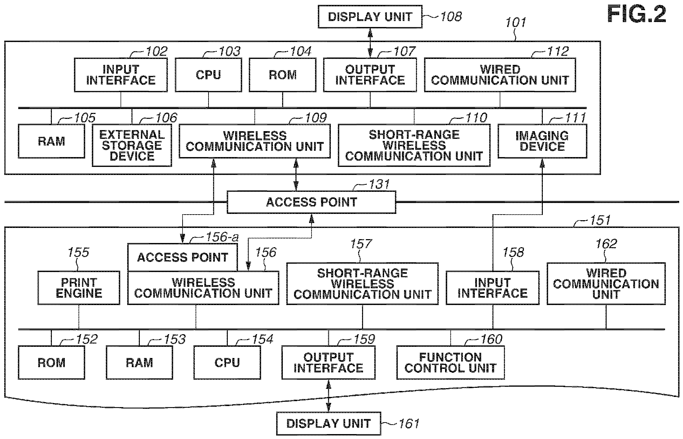

Next, a hardware configuration of the information processing apparatus according to the present embodiment and the communication apparatus that can communicate with the information processing apparatus of the present embodiment will be described with reference to the block diagram of Fig. 2. While the present embodiment is described by using the following configuration as an example, the present embodiment is applicable to any apparatus that can communicate with a communication apparatus, and functions are not limited in particular to those illustrated in the diagram.

The terminal apparatus 101 includes an input interface 102, a central processing unit (CPU) 103, a read-only memory (ROM) 104, a random access memory (RAM) 105, an external storage device 106, an output interface 107, a display unit 108, a wireless communication unit 109, a short-range wireless communication unit 110, an imaging device 111, and a wired communication unit 112. The CPU 103, the ROM 104, and the RAM 105 form a computer of the terminal apparatus 101.

The input interface 102 is an interface for accepting data input and operation instructions from the user, and includes a physical keyboard, buttons, and/or a touchscreen. The output interface 107 to be described below and the input interface 102 may be integrally configured so that screen output and the acceptance of user operations are performed by the same configuration.

The CPU 103 is a system control unit and controls the entire terminal apparatus 101. In the present embodiment, the CPU 103 controls display content (performs display control) on the display unit 108.

The ROM 104 stores fixed data such as control programs for the CPU 103 to execute, data tables, and operating system (OS) programs. In the present embodiment, the control programs stored in the ROM 104 perform software execution control such as scheduling, task switching, and interrupt handling under the management of the built-in OS stored in the ROM 104. In the present embodiment, the OS on the terminal apparatus 101 is a Windows (registered trademark) OS. In the present exemplary embodiment, the application programs to run on the terminal apparatus 101 are therefore application programs for the Windows (registered trademark) OS. In the present embodiment, the ROM 104 stores a predetermined application program (app) for controlling the communication apparatus 151. Application programs can also be referred to as application software. The predetermined app is an app provided by the vendor of the communication apparatus 151, and is one for performing network repair so that the terminal apparatus 101 and the communication apparatus 151 can communicate with each other. The predetermined app may have other functions in addition to the network repair function. Specifically, examples of the other functions include a function of transmitting print jobs for causing the communication apparatus 151 to perform printing (print job transmission function) and a function of transmitting scan jobs for causing the communication apparatus 151 to perform scanning (scan job transmission function). For example, the predetermined app is installed on the terminal apparatus 101 from outside via a web page provided by the vendor of the communication apparatus 151. In the present embodiment, processing described to be performed by the OS is, more precisely, that performed by the CPU 103 based on programs within the OS. Similarly, processing described to be performed by an app is, more precisely, that performed by the CPU 103 based on programs within the app.

The RAM 105 includes a static random access memory (SRAM) that requires a backup power supply. Since the RAM 105 retains data using a not-illustrated primary battery for data backup, important data such as program control variables can be stored in a nonvolatile manner. The RAM 105 also provides a memory area where setting information about the terminal apparatus 101 and management data on the terminal apparatus 101 are stored. The RAM 105 is also used as a main memory and a work area of the CPU 103.

The external storage device 106 stores various programs, including a print information generation program for generating print information interpretable by the communication apparatus 151 and an information transmission and reception control program for performing transmission and reception to/from the communication apparatus 151 connected via the wireless communication unit 109. The external storage device 106 also stores various types of information used by such programs, and image data acquired from other information processing apparatuses and the Internet.

The output interface 107 is an interface for controlling data display and state notification of the terminal apparatus 101 on the display unit 108.

The display unit 108 includes a light-emitting diode (LED), a liquid crystal display (LCD), and/or the like, and displays data and issues state notifications of the terminal apparatus 101. A software keyboard including keys such as numerical input keys, a mode setting key, an enter key, a cancel key, and a power key may be provided on the display unit 108, and user input may be accepted via the display unit 108. In the present embodiment, the display unit 108 is a touchscreen and can accept the user's operations using fingers and operating tools such as a stylus.

The wireless communication unit 109 is a component for wirelessly connecting to devices such as the communication apparatus 151 and the AP 131 and performing data communication. For example, the wireless communication unit 109 may communicate directly with the communication apparatus 151 by wireless communication, or communicate via the AP 131 located outside the terminal apparatus 101 and the communication apparatus 151. In the present embodiment, Wi-Fi that is a communication method based on the IEEE 802.11 standards is used as the wireless communication method of the wireless communication unit 109. In the present embodiment, the wireless LAN refers to a Wi-Fi network. The wireless communication unit 109 thus performs wireless LAN communication using the wireless LAN function of the terminal apparatus 101. In the present embodiment, connection using a method where the terminal apparatus 101 and the communication apparatus 151 are directly connected without the intermediary of an external AP will be referred to as direct connection. Connection using a method where the terminal apparatus 101 and the communication apparatus 151 are connected via an external AP will be referred to as infrastructure connection.

The short-range wireless communication unit 110 is a component for performing data communication with devices such as the communication apparatus 151 using a short-range wireless communication method. The short-range wireless communication unit 110 communicates using a communication method different from that of the wireless communication unit 109. The short-range wireless communication unit 110 can communicate with a short-range wireless communication unit 157 in the communication apparatus 151. Examples of the communication method of the short-range wireless communication unit 110 include Bluetooth^{®} Low Energy, Bluetooth^{®} Classic, Wi-Fi Aware, and NFC.

The imaging device 111 is a device for converting images captured by an image sensor into digital data.

The digital data is once stored in the RAM 105. The digital data is then converted into a predetermined image format by a program executed by the CPU 103, and stored in the external storage device 106 as image data.

The wired communication unit 112 is a component for connecting to devices such as the communication apparatus 151 and the AP 131 in a wired manner and performing data communication. For example, the wired communication unit 112 communicates via a wired LAN. In the present embodiment, the wired LAN communicates based on the Ethernet standard. Such a configuration is not restrictive, and the wired communication unit 112 may communicate via a Universal Serial Bus (USB) cable, for example. If, for example, the terminal apparatus 101 is a smartphone, the terminal apparatus 101 does not need to include the wired communication unit 112.

The communication apparatus 151 includes a ROM 152, a RAM 153, a CPU 154, a print engine 155, a wireless communication unit 156, a short-range wireless communication unit 157, an input interface 158, an output interface 159, a function control unit 160, a display unit 161, and a wired communication unit 162.

The ROM 152, the RAM 153, and the CPU 154 form a computer of the communication apparatus 151.

The wireless communication unit 156 is a component for wirelessly connecting to devices such as the terminal apparatus 101 and the AP 131 and performing data communication. In the present embodiment, Wi-Fi that is a communication method based on the IEEE 802.11 standards is used as the wireless communication method of the wireless communication unit 156. However, Bluetooth^{®} Classic may be used. The wireless communication unit 156 includes an AP 156-a as an internal AP of the communication apparatus 151. The AP 156-a is intended to establish connection with devices such as the terminal apparatus 101. The AP 156-a can connect to the wireless communication unit 109 of the terminal apparatus 101. The wireless communication unit 156 may communicate directly with the terminal apparatus 101 via the AP 156-a, or communicate with the terminal apparatus 101 via the AP 131. The AP 156-a may be a piece of hardware functioning as an AP. The wireless communication unit 156 may function as the AP 156-a using software for providing AP functionality. The communication apparatus 151 may be capable of running a plurality of internal APs with different service set identifiers (SSIDs) and passwords inside.

The RAM 153 includes a dynamic RAM (DRAM) that requires a backup power supply. Since the RAM 153 retains data using a not-illustrated power supply for data backup, important data such as program control variables can be stored in a nonvolatile manner. The RAM 153 is also used as a main memory and a work memory of the CPU 154, and stores various types of information as a reception buffer for temporarily storing print information received from the terminal apparatus 101.

The ROM 152 stores fixed data such as control programs to be executed by the CPU 154, data tables, and OS programs. In the present embodiment, the control programs stored in the ROM 152 perform software execution control such as scheduling, task switching, and interrupt handling under the management of the built-in OS stored in the ROM 152. The ROM 152 also provides a memory area for storing data that needs to be stored even without power supply, such as setting information about the communication apparatus 151 and management data on the communication apparatus 151.

The CPU 154 is a system control unit and controls the entire communication apparatus 151.

The print engine 155 forms images on paper or other recording media using recording agents such as ink based on information stored in the RAM 153 and print jobs received from the terminal apparatus 101, and outputs the printout. Since print jobs to be transmitted from the terminal apparatus 101 here have large transmission data volumes and are desirably communicated at high speed, the print engine 155 receives the print jobs via the wireless communication unit 156, which demands high-speed communication compared to the short-range wireless communication unit 157.

The short-range wireless communication unit 157 is a component for communicating with devices such as the terminal apparatus 101 by using a short-range wireless communication method. Examples of the communication method of the short-range wireless communication unit 157 include Bluetooth^{®} Low Energy, Bluetooth^{®} Classic, and Wi-Fi Aware.

The input interface 158 is an interface for accepting data input and operation instructions from the user, and includes a physical keyboard, buttons, and/or a touchscreen. The output interface 159 to be described below and the input interface 158 may be integrally configured so that screen output and the acceptance of user operation are performed by the same configuration. The output interface 159 is an interface for controlling data display and state notification of the communication apparatus 151 on the display unit 161.

The function control unit 160 performs function operation management as to whether to operate the functions of the communication apparatus 151 simultaneously.

The display unit 161 includes an LED, a LCD, and/or the like, and displays data and issues state notifications of the communication apparatus 151. A software keyboard including numerical input keys, a mode setting key, an enter key, a cancel key, and a power key may be provided on the display unit 161, and user input may be accepted via the display unit 161.

The wired communication unit 162 is a component for connecting to devices such as the terminal apparatus 101 and the AP 131 in a wired manner and performing data communication. For example, the wired communication unit 162 communicates via a wired LAN. Such a configuration is not restrictive. For example, the wired communication unit 162 may communicate via a USB cable.

### <Direct Connection Method>

Direct connection refers to a mode where the apparatuses are wirelessly connected to each other directly (i.e., in a peer-to-peer manner) without the intermediary of external devices such as the AP 131. Direct connection is also referred to as peer-to-peer (P2P) connection. The communication apparatus 151 can operate in a mode for communicating through direct connection (direct connection mode) as one of its connection modes. Wi-Fi communication has a plurality of modes for communicating through direct connection, including a software AP mode and a Wi-Fi Direct (WFD) mode.

The WFD mode is a mode where direct connection is implemented by WFD. WFD is a standard stipulated by the Wi-Fi Alliance and included in the IEEE 802.11 series communication standards. In the WFD mode, a device to serve as a communication partner is discovered using a device discovery command and then the roles of a P2P group owner (GO) and a P2P client are determined before the rest of the wireless connection processing is performed. The GO corresponds to a Wi-Fi parent station (parent device), and the client a Wi-Fi child station (child device). The role determination corresponds to P2P GO Negotiation, for example. In the WFD mode before the role determination, the communication apparatus 151 is neither a parent station nor a child station. Specifically, one of the devices to communicate initially issues a device discovery command to search for a device to connect to in the WFD mode. If the other device that serves as a communication partner is discovered, the two devices check information about services and functions that each other's devices can provide. This device provision information check is optional and not mandatory. This device provision information check phase corresponds to P2P Provision Discovery, for example. Next, the devices mutually check the device provision information, and determine which serves as the P2P client and which serves as the P2P GO. Next, with the client ang GO determined, the devices exchange parameters for performing WFD communication. The P2P client and GO perform the rest of the wireless connection processing and Internet Protocol (IP) connection processing with each other based on the exchanged parameters. In the WFD mode, the communication apparatus 151 may always operate as a GO without performing the foregoing GO Negotiation. In other words, the communication apparatus 151 may operate in the WFD mode that is an Autonomous GO mode. Examples of the state where the communication apparatus 151 operates in the WFD mode include where the communication apparatus 151 operates as a GO without WFD connection established, and where the communication apparatus 151 operates as a GO with the WFD connection established.

In the software AP mode, one (for example, the terminal apparatus 101) of the devices to communicate (for example, the terminal apparatus 101 and the communication apparatus 151) serves as a client to play the role of requesting various services. The other device implements the Wi-Fi AP function through software settings. The software AP corresponds to the Wi-Fi parent station, and the client the Wi-Fi child station. In the software AP mode, the client searches for a device to serve as the software AP, using a device discovery command. Once the software AP is discovered, the client and the software AP go through the rest of the wireless connection processing (establishment of wireless connection), and then perform the IP connection processing (allocation of IP addresses). The commands and parameters to be transmitted and received in establishing the wireless connection between the client and the software AP may be those defined by the Wi-Fi standard, and a description thereof will be omitted here.

In the present embodiment, while direct connection is established and maintained by the communication apparatus 151, the communication apparatus 151 operates as the parent station within the network to which the communication apparatus 151 belongs. A parent station refers to a device that constructs a wireless network and provides child stations with parameters to be used in connecting to the wireless network. Examples of the parameters to be used in connecting to the wireless network include parameters about channels that the parent station uses. Child stations receive the parameters, and connect to the wireless network constructed by the parent station, using the channels used by the parent station. In the direct connection mode, the communication apparatus 151 operates as the parent station and can thus determine which frequency band to use and which channel to use for communication in the direct connection mode. In the present embodiment, the communication apparatus 151 can use channels corresponding to the 2.4-GHz frequency band and channels corresponding to the 5-GHz frequency band for communication in the direct connection mode.

### <Infrastructure Connection Method>

Infrastructure connection is a connection mode where devices to communicate (for example, the terminal apparatus 101 and the communication apparatus 151) connect to an AP (for example, the AP 131) that governs the network of the devices, and communicate with each other via the AP. The communication apparatus 151 can operate in a mode for communicating through infrastructure connection (infrastructure connection mode) as one of its connection modes.

In infrastructure connection, each device searches for the AP using a device discovery command. Once the AP is discovered, the device and the AP go through the rest of the wireless connection processing (establishment of wireless connection) and then perform IP connection processing (allocation of IP addresses). The commands and parameters to be transmitted and received in implementing the wireless connection between the device and the AP may be those defined in the Wi-Fi standard, and a description thereof will be omitted here.

In the present embodiment, when the communication apparatus 151 operates with infrastructure connection, the AP 131 operates as the parent station and the communication apparatus 151 a child station. In other words, in the present embodiment, the infrastructure connection refers to connection between the communication apparatus 151 operating as a child station and the device operating as the parent station. If the communication apparatus 151 establishes the infrastructure connection and the terminal apparatus 101 also establishes infrastructure connection with the AP 131, the communication apparatus 151 and the terminal apparatus 101 can communicate with each other via the AP 131. Since the channel to be used in infrastructure connection is determined by the AP 131, the communication apparatus 151 performs communication through the infrastructure connection using the channel determined by the AP 131. In the present embodiment, the communication apparatus 151 can use channels corresponding to the 2.4-GHz frequency band and channels corresponding to the 5-GHz frequency band for infrastructure connection communication. The communication apparatus 151 can also use channels corresponding to Dynamic Frequency Selection (DFS) bands in the 5-GHz frequency band for infrastructure connection communication. To communicate with the communication apparatus 151 via the AP 131, the terminal apparatus 101 recognizes and identifies the communication apparatus 151 belonging to the network that is formed by the AP 131 and to which the terminal apparatus 101 belongs.

### <Connection Setting Processing>

In the present embodiment, the terminal apparatus 101 configures connection settings (network settings) that are settings for operating the communication apparatus 151 by at least one communication method between infrastructure connection and direct connection, using wireless communication with the communication apparatus 151. The connection setting processing according to the present embodiment is performed through wireless communication, and therefore also referred to as cableless setup (CLS). The connection setting processing may be performed through wired connection. The terminal apparatus 101 performs the connection setting processing with the communication apparatus 151 when the predetermined app stored in the external storage device 106 is running. The communication apparatus 151 can operate in a connection setting mode (connection setting state) that is the mode for performing the connection setting processing, and performs the connection setting processing when operating in the connection setting mode described below. Details of the connection setting mode will be described below.

When causing the communication apparatus 151 to operate in the infrastructure connection mode, the terminal apparatus 101 wirelessly transmits infrastructure setting information that is setting information for causing the operation in the infrastructure connection mode to the communication apparatus 151. The infrastructure setting information includes information about the AP 131. Examples of the information about the AP 131 include information about an SSID, password, and frequency bands.

By contrast, when causing the communication apparatus 151 to operate in the direct connection mode, the terminal apparatus 101 wirelessly transmits direct setting information that is setting information for causing the operation in the direct connection mode to the communication apparatus 151. The direct setting information includes instructions to enable the WFD function and cause the communication apparatus 151 to operate as a GO, and enable the AP setting of the communication apparatus 151. The terminal apparatus 101 acquires connection information necessary to establish direct connection with the communication apparatus 151 from the communication apparatus 151. Examples of the connection information for establishing direct connection with the communication apparatus 151 include information about the SSID and password of the communication apparatus 151 to operate in the direct connection mode.

In the present embodiment, to transmit the infrastructure setting information and direct setting information and acquire the information for establishing direct connection with the communication apparatus 151 in the connection setting processing, connection setting-specific direct connection between the terminal apparatus 101 and the communication apparatus 151 is used. In the present embodiment, Wi-Fi-based connection setting processing is performed as the connection setting-specific direct connection. However, non-Wi-Fi wireless communication standards such as Bluetooth^{®} may be used. Wired communication standards such as wired LAN and USB may be used for the connection setting-specific direct connection.

After Wi-Fi-based infrastructure connection or direct connection is established between the terminal apparatus 101 and the communication apparatus 151 by the connection setting processing, the terminal apparatus 101 and the communication apparatus 151 can communicate with each other via the established connection. Specifically, for example, the terminal apparatus 101 can transmit print jobs for causing the communication apparatus 151 to perform printing and scan jobs for causing the communication apparatus 151 to perform scanning to the communication apparatus 151 via the established connection. The function of transmitting print jobs and scan jobs to the communication apparatus 151 may be performed by the predetermined app. In the present embodiment, the communication apparatus 151 can be caused to operate in either of the infrastructure connection mode and the direct connection mode by the connection setting processing. However, such a configuration is not restrictive. For example, the communication apparatus 151 may be configured to be operable only in the infrastructure connection mode (i.e., the communication apparatus 151 is unable to operate in the direct connection mode) by the connection setting processing.

### <Connection Setting Mode>

The communication apparatus 151 can operate in the connection setting mode. The operation of the communication apparatus 151 in the connection setting mode may be triggered, for example, by the user pressing a connection setting mode button or by the communication apparatus 151 being activated (powered on) for the first time after delivery. The connection setting mode button may be a hardware button disposed on the communication apparatus 151 or a software button that the communication apparatus 151 displays on the display unit 161.

Starting the operation in the connection setting mode, the communication apparatus 151 enables both Wi-Fi communication and Bluetooth^{®} Low Energy communication. Specifically, the communication apparatus 151 enables its internal AP 156-a (connection setting AP) dedicated for the connection setting mode as Wi-Fi communication enabling processing. This enables the communication apparatus 151 to establish Wi-Fi-based direct connection with the terminal apparatus 101. Connection information (SSID and password) for connecting to the connection setting AP is stored in advance in the predetermined app installed on the terminal apparatus 101. In other words, terminal apparatus 101 recognizes beforehand the connection information for connecting to the connection setting AP. Unlike connection information about the AP to be enabled in the direct connection mode, the connection information for connecting to the connection setting AP is not freely changeable by the user. The connection setting AP may be configured so that no encryption method is set and no password is needed to connect to this AP. In the connection setting mode, the communication apparatus 151 may connect to the terminal apparatus 101 via WFD instead of normal Wi-Fi. In other words, the communication apparatus 151 may operate as a GO and receive setting commands from the terminal apparatus 101 through WFD communication.

### <Registration of Communication apparatus in App>

In the present embodiment, the predetermined app can register the communication apparatus 151 therein by acquiring information about the communication apparatus 151 from the communication apparatus 151.

Examples of the information about the communication apparatus 151 include capability information about the communication apparatus 151, identification information (such as a media access control [MAC] address) about the communication apparatus 151, and model information about the communication apparatus 151. Specifically, the capability information about the communication apparatus 151 includes a list of information about functions supported by the communication apparatus 151, information about consumables (inks and sheets) usable by the communication apparatus 151, and information indicating the printing method of the communication apparatus 151. The predetermined app selects a device to serve as the communication partner for the predetermined app from one or more communication apparatuses 151 registered in the predetermined app. The communication apparatus 151 currently selected as the device to serve as the communication partner for the predetermined app will hereinafter be referred to as the selected communication apparatus 151. The device to serve as the communication partner for the predetermined app may be selected by accepting the user's selection from the one or more communication apparatuses 151 registered in the predetermined app, or automatically selected by the predetermined app based on predetermined criteria. Moreover, the device to serve as the communication partner for the predetermined app may be changed, for example, by accepting the user's selection from the one or more communication apparatuses 151 registered in the predetermined app. In the present embodiment, the predetermined app transmits various jobs such as print jobs and scan jobs to the selected communication apparatus 151. In other words, the selected communication apparatus 151 is the device that serves as the transmission destination of various jobs.

### <Screen for Configuring Settings Related to Position Information Service>

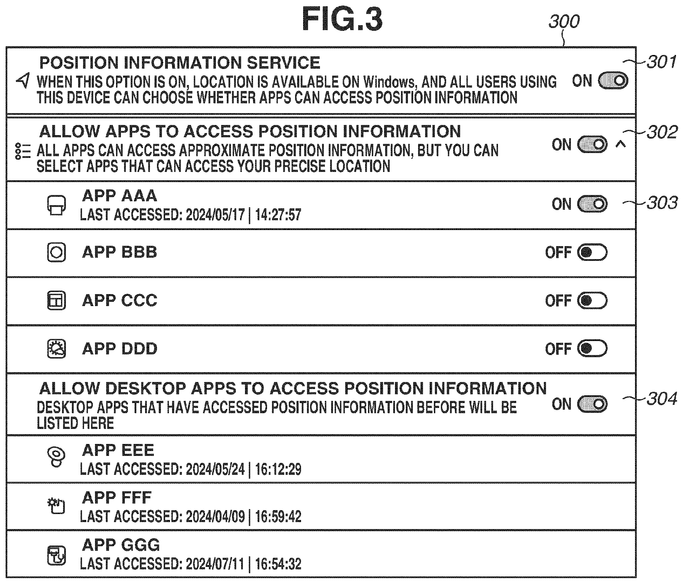

An OS standard setting app of the terminal apparatus 101 can display a setting screen 300 for changing settings related to the position information service as illustrated in Fig. 3. The setting screen 300 is displayed in a window displayed by the OS standard setting app. In the setting screen 300, an area 301 is an area for allowing or disallowing the use of the position information service for the terminal apparatus 101. The area 301 includes a first toggle button, and the use of the position information service is allowed or disallowed for the terminal apparatus 101 by operating the first toggle button. When the use of the position information service is allowed for the terminal apparatus 101, apps selected in areas 302 to 304 as apps to allow the use of the position information service can use the position information service. In other words, even when the use of the position information service is allowed for the terminal apparatus 101, apps not selected as apps to allow the use of the position information service are unable to use the position information service. On the other hand, when the use of the position information service is disallowed for the terminal apparatus 101, all the apps on the terminal apparatus 101 are unable to use the position information service. When the use of the position information service is disallowed for the terminal apparatus 101, the areas 302 to 304 to be described below may be grayed out to disable operation on the areas 302 to 304.

The area 302 is an area for allowing or disallowing the use of the position information service for Universal Windows Platform (UWP) apps and desktop apps on the terminal apparatus 101. The area 302 includes a second toggle button. By operating the second toggle button, the use of the position information service can be allowed or disallowed for the UWP apps and desktop apps on the terminal apparatus 101. UWP apps are apps that are created using the UWP method and installed based on information downloaded via store functionality compatible with Windows. A specific example of the store functionality compatible with Windows is Microsoft Store. By contrast, desktop apps are apps that are not installed based on information downloaded via the store functionality compatible with Windows. Specifically, desktop apps are apps installed based on information downloaded from web pages provided by the vendors of the respective apps. Alternatively, desktop apps may refer to apps installed based on information downloaded from a Compact Disc (CD), a USB memory, or other storage media attached to the terminal apparatus 101. In the present embodiment, the predetermined app is a desktop app.

The areas 303 are areas for allowing or disallowing the use of the position information service for the respective UWP apps on the terminal apparatus 101. In the present embodiment, the terminal apparatus 101 can allow or disallow the use of the position information service for each individual UWP app. For that purpose, the areas 303 include toggle buttons assigned to the respective apps, and the use of the position information service is individually allowed or disallowed for the apps by operating the respective toggle buttons. More specifically, apps corresponding to toggle buttons operated to allow the use of the position information service in the areas 303 are selected as apps allowed to use the position information service.

The area 304 is an area for allowing or disallowing the use of the position information service for the desktop apps on the terminal apparatus 101. In the present embodiment, the terminal apparatus 101 is not capable of allowing or disallowing the use of the position information service for each individual desktop app. In other words, the terminal apparatus 101 can only collectively allow or disallow the use of the position information service for the desktop apps. By operating the toggle button displayed in the area 304, the use of the position information service is allowed or disallowed for all the desktop apps on the terminal apparatus 101. In other words, when the toggle button in the area 304 is operated to allow the use of the position information service, all the desktop apps on the terminal apparatus 101 are selected as apps allowed to use the position information service. The area 304 may include areas displaying the desktop apps on the terminal apparatus 101.

In the present embodiment, the setting app controls the areas that the user can operate on the setting screen 300 depending on the type of account logged in to the terminal apparatus 101. Specifically, if the account logged in to the terminal apparatus 101 is an administrator account, the setting app controls the areas so that the user can operate all the areas 301 to 304. On the other hand, if the account logged in to the terminal apparatus 101 is a standard user account with lower privileges than an administrator account, the setting app controls the areas so that the user can operate not the area 301 but only the areas 302, 303, and 304.

In other words, a user logged in with a standard user account is unable to change the use settings of the position information service for the UWP apps and desktop apps on the terminal apparatus 101 until a user logged in with an administrator account operates the area 301 to allow the use of the position information service for the terminal apparatus 101 itself.

### <Issues to Be Addressed by Present Exemplary Embodiment>

As described above, in the present embodiment, the predetermined app is allowed to use the position information service by operating the setting screen 300. In other words, the use of the position information service is allowed for the predetermined app. If the OS on the terminal apparatus 101 is a certain OS (for example, Windows (registered trademark)), the predetermined app is unable to acquire information about Wi-Fi communication functions from the OS unless the use of the position information service is allowed for the predetermined app. A specific example of the information about the Wi-Fi communication functions is information about the AP to which the terminal apparatus 101 is currently connected via Wi-Fi. Another example is information about APs that are issuing beacons near the terminal apparatus 101 and are discovered by the terminal apparatus 101 through Wi-Fi searches. In the present embodiment, the terminal apparatus 101 needs to acquire the information about the AP to which the terminal apparatus 101 is currently connected via Wi-Fi and the information about the connection setting AP enabled by the communication apparatus 151 operating in the connection setting mode from the OS in the connection setting processing. The terminal apparatus 101 is therefore unable to appropriately perform the connection setting processing unless the use of the position information service is allowed for the predetermined app.

The predetermined app therefore desirably determines whether the use of the position information service is allowed for the predetermined app, and if not, prompts the user to allow the use of the position information service for the predetermined app. However, certain OSes including Windows (registered trademark) do not provide application programming interfaces (APIs) for acquiring information directly indicating whether the use of the position information service is allowed for the predetermined app from the OS. In other words, there is an issue that the predetermined app, when running on a certain OS, is unable to perform the determination by using an API for acquiring the information directly indicating whether the use of the position information service is allowed for the predetermined app from the OS. To address this issue, the present embodiment performs the determination by using a method different from that using the API for acquiring the information directly indicating whether the use of the position information service is allowed for the predetermined app from the OS. Based on the determination result, the predetermined app then prompts the user to allow the use of the position information service.

### <Processing Performed by Predetermined App in Present Exemplary Embodiment>

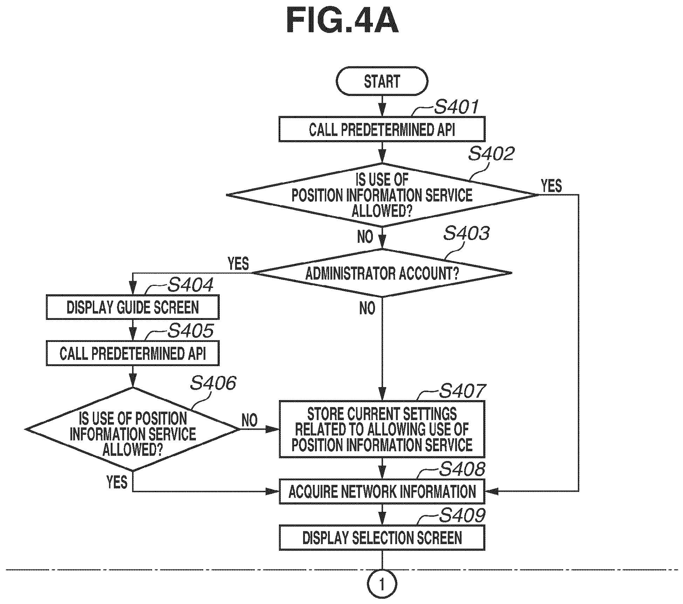

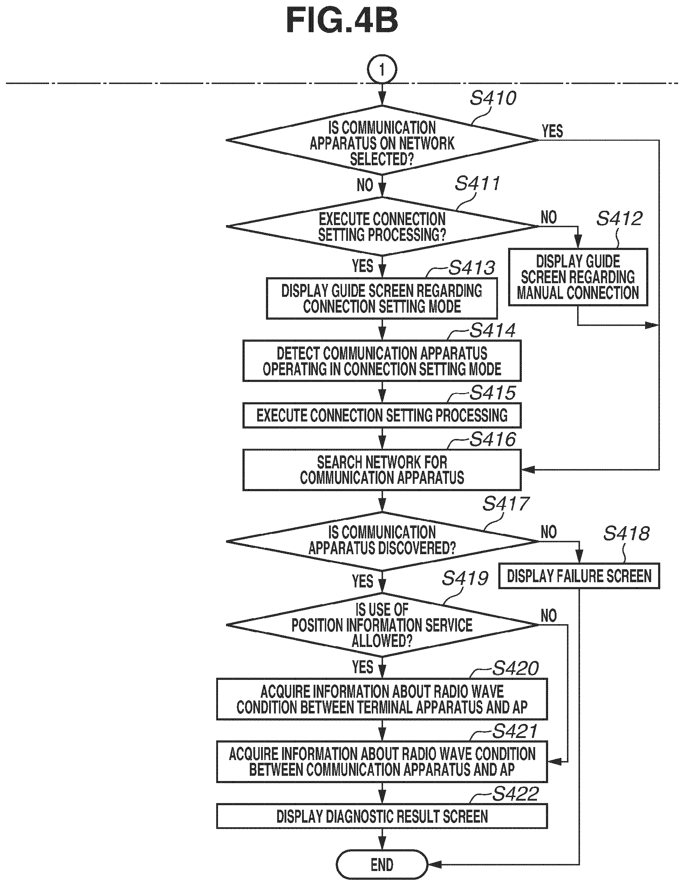

Figs. 4A and 4B are a flowchart illustrating an example of processing performed by the terminal apparatus 101 using the predetermined app in the present embodiment. The processes in the flowchart of Figs. 4A and 4B are implemented by the CPU 103 loading the predetermined app stored in the ROM 104 or other memory into the RAM 105 and executing the predetermined app. The flowchart of Figs. 4A and 4B is started upon acceptance of an operation for network repair from the user on a screen displayed by the predetermined app.

The flowchart of Figs. 4A and 4B may be started upon launching of the predetermined app.

The flowchart of Figs. 4A and 4B may be started based on a failure of communication with the communication apparatus 151, attempted by the predetermined app or other apps.

In step S401, the CPU 103 calls a predetermined API. In the present embodiment, the predetermined API is an API for acquiring information about the position information service from the OS. In other words, the predetermined API is an API for apps to access the information about the position information service. In the present embodiment, the information about the position information service is information acquired by the terminal apparatus 101 using a wireless LAN function. The reason is that an application program acquiring the information acquired by the terminal apparatus 101 using the wireless LAN function may be able to identify the position of the terminal apparatus 101 and the positions of other devices based on the information. Specific examples of the information acquired by the terminal apparatus 101 using the wireless LAN function include information about a list of wireless networks that the terminal apparatus 101 can access, information about a list of the basic service sets (BSSs) of the networks that the terminal apparatus 101 can access, and information about the network to which the terminal apparatus 101 is currently connected via Wi-Fi.

Suppose that the use of the position information service is not allowed for the app executing the predetermined API. In such a case, when the predetermined API is called, the OS notifies the app calling the predetermined API of an error instead of correct values. Specifically, the OS notifies the app of an error code ERROR_ACCESS_DENIED, which indicates that the access to the information about the position information service is denied. By contrast, suppose that the use of the position information service is allowed for the app calling the predetermined API. In such a case, when the predetermined API is called, the OS notifies the app calling the predetermined API of correct values as the information about the position information service. Specifically, the OS notifies the app of a code ERROR_SUCCESS, which indicates that the access to the information position information service is successful, as well as correct values that are the information about the position information service.

There may be more than one predetermined API. For example, predetermined APIs corresponding to Windows OS include WlanGetAvailableNetworklist (hereinafter, first API), WlanGetAvailableBSSList (hereinafter, second API) WlanQueryInterface (hereinafter, third API), and WlanScan (hereinafter, fourth API).

The first API is an API for acquiring the information about the list of wireless networks that the terminal apparatus 101 can access. The wireless networks that the terminal apparatus 101 can access refer to networks formed by APs that are located near the terminal apparatus 101 and issuing beacons based on the Wi-Fi standard. Specifically, the information acquired using the first API is information indicating the SSIDs of the APs forming the wireless networks that the terminal apparatus 101 can access, the authentication methods and encryption methods of the APs, and the frequency bands used by the APs.

The second API is an API for acquiring the information about the list of the BSSs of the networks that the terminal apparatus 101 can access. Specifically, the information acquired using the second API is information indicating the SSIDs of the APs forming the wireless networks that the terminal apparatus 101 can access, and the BSSs of the wireless networks that the terminal apparatus 101 can access. It should be noted that the wireless networks indicated by the information acquired using the first and second APIs are not ones discovered by searches (scans) performed based on the execution of the first or second API. In other words, the OS does not perform a new wireless network search based on calls to the first and second APIs. Examples of the wireless networks indicated by the information acquired using the first and second APIs include networks discovered by searches performed by the OS at given timing before the calls to the first and second APIs and searches performed based on the call to the fourth API.

The third API is an API for acquiring the information about the network to which the terminal apparatus 101 is currently connected via Wi-Fi. The information about the network to which the terminal apparatus 101 is currently connected via Wi-Fi is, in other words, information about the AP forming the network to which the terminal apparatus 101 is currently connected via Wi-Fi. Specifically, the information acquired using the third API is information indicating the SSID of the AP forming the network to which the terminal apparatus 101 is currently connected via Wi-Fi, and the authentication method and encryption method of the AP.

The fourth API is an API for causing the OS to perform a search for wireless networks that the terminal apparatus 101 can access.

In the present embodiment, in step S401, the third API among the first to fourth APIs is called. However, such a configuration is not restrictive, and any predetermined API may be called. The predetermined APIs are not limited to only the first to fourth APIs, and may include other types of APIs for acquiring information about the position information service from the OS.

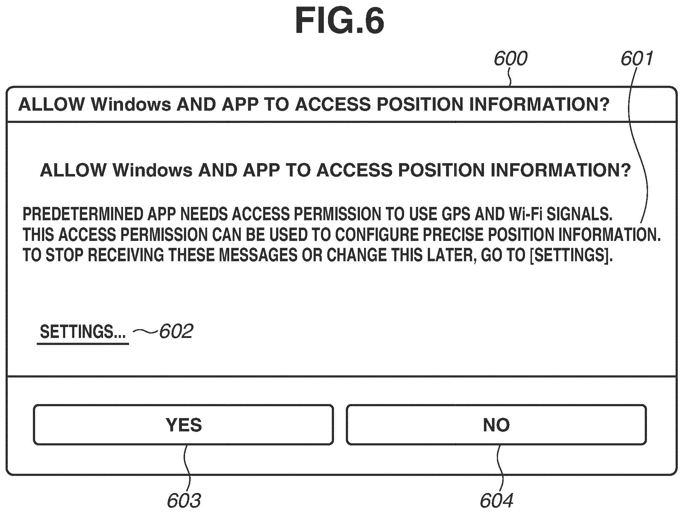

When, in step S401, the predetermined API is called by the predetermined app, the OS performs processing based on the call to the predetermined API. Specifically, the OS initially determines whether the predetermined API is called by the predetermined app for the first time, and whether the use of the position information service is allowed for the predetermined app. If the predetermined API is determined to be called by the predetermined app for the first time and the use of the position information service is determined to not be allowed for the predetermined app, the OS displays an inquiry screen for inquiring the user whether to allow the use of the position information service for the predetermined app. Fig. 6 illustrates an inquiry screen 600, which is an example of the inquiry screen displayed here. The inquiry screen 600 includes an area 601 that displays a message for inquiring whether to allow the use of the position information service for the predetermined app and a message indicating that the use of the position information service needs to be allowed for the predetermined app. The inquiry screen 600 also includes a button 602 for displaying the setting screen 300. If the button 602 is operated by the user, the OS launches the OS standard setting app and causes the OS standard setting app to display the setting screen 300. The inquiry screen 600 also includes a button 603 for allowing the use of the position information service for the predetermined app and a button 604 for disallowing the use of the position information service for the predetermined app. If the button 603 is operated by the user, the OS allows the use of the position information service for the terminal apparatus 101 and allows the use of the position information service for the predetermined app. On the other hand, if the button 604 is operated by the user, the OS maintains the state where the use of the position information service is not allowed for the predetermined app.

After the setting related to allowing the use of the position information service for the predetermined app is changed or maintained by operating the button 603 or 604, the OS determines whether the use of the position information service is allowed for the predetermined app. If the predetermined API is determined to not be called by the predetermined app for the first time, the OS determines whether the use of the position information service is allowed for the predetermined app without displaying the inquiry screen 600. If the use of the position information service is allowed for the predetermined app, the OS notifies the predetermined app of the code ERROR_SUCCESS corresponding to the successful call to the predetermined API, and notifies the predetermined app of the correct values that are the information about the position information service. On the other hand, if the use of the position information service is not allowed for the predetermined app, the OS notifies the predetermined app of the error code ERROR_ACCESS_DENIED corresponding to the failed information access by the predetermined API, without notifying the predetermined app of the correct values that are the information about the position information service.

In step S402, the CPU 103 determines whether the use of the position information service is allowed for the predetermined app. Specifically, in this process, the CPU 103 determines whether the code corresponding to the successful information access by the predetermined API is notified as a result of the call to the predetermined API. In other words, this determination corresponds to processing for determining whether the information about the position information service is successfully accessed in response to the call to the predetermined API. If the determination is no because the use of the position information service is not allowed for the predetermined app and the error code corresponding to the failed information access by the predetermined API is notified from the OS as a result of the call to the predetermined API (NO in step S402), the processing proceeds to step S403. On the other hand, if the determination is yes because the use of the position information service is allowed for the predetermined app and the correct values are notified from the OS as a result of the call to the predetermined API (YES in step S402), the processing proceeds to step S408.

In step S403, the CPU 103 identifies the type of user account currently logged in to the terminal apparatus 101, and determines whether the identified account is an administrator account (as opposed to a standard user account). If the determination is yes (YES in step S403), the processing proceeds to step S404. If the determination is no (NO in step S403), the processing proceeds to step S407.

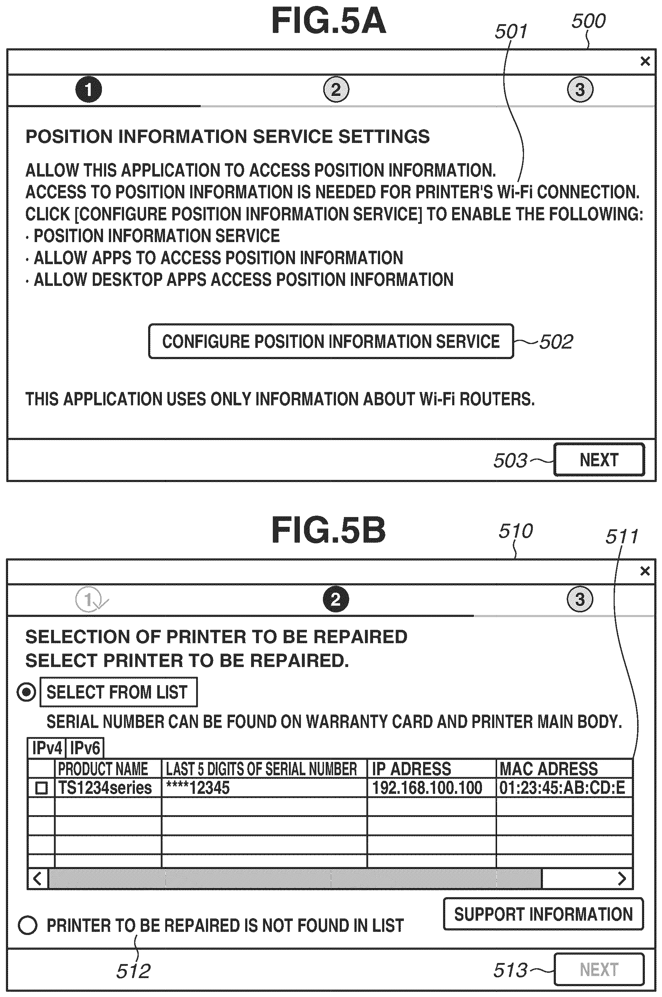

In step S404, the CPU 103 performs display processing to display a guide screen for prompting the user to allow the use of the position information service for the predetermined app. Fig. 5A illustrates a guide screen 500, which is an example of the guide screen displayed in step S404. The guide screen 500 includes an area 501 that displays a message for prompting the user to allow the use of the position information service for the predetermined app and a message indicating operations for allowing the use of the position information service for the predetermined app. The guide screen 500 may also include a message indicating information that the predetermined app acquires as the information about the position information service. More specifically, in the present embodiment, the guide screen 500 may include a message indicating that the predetermined app acquires information about APs (Wi-Fi routers) as the information about the position information service, for example. The guide screen 500 also includes a button 502 for displaying the setting screen 300. If the button 502 is operated by the user, the CPU 103 launches the OS standard setting app and causes the OS standard setting app to display the setting screen 300. The display of the guide screen 500 is maintained even when the button 502 is operated to display the setting screen 300. This enables the user to operate the button 503 included in the guide screen 500 after allowing the use of the position information service for the predetermined app on the setting screen 300. When the button 503 is operated, the processing proceeds to step S405.

In step S405, the CPU 103 calls the predetermined API again in a manner similar to in step S401.

In step S406, like step S402, the CPU 103 determines whether the use of the position information service is allowed for the predetermined app. If the determination is no because the use of the position information service is not allowed for the predetermined app and the error code is notified from the OS as a result of the call to the predetermined API (NO in step S406), the processing proceeds to step S407. On the other hand, if the determination is yes because the use of the position information service is allowed for the predetermined app and the correct values are notified from the OS as a result of the call to the predetermined API (YES in step S406), the processing proceeds to step S408.

In step S407, the CPU 103 stores in memory the current settings related to allowing the use of the position information service for the predetermined app. In other words, the CPU 103 stores in memory information indicating that the setting corresponds to the use of the position information service not being allowed for the predetermined app. The processing then proceeds to step S408.

In step S408, the CPU 103 acquires the information about the network to which the terminal apparatus 101 is currently connected via Wi-Fi. Specifically, in step S408, the CPU 103 calls the third API. If the use of the position information service is allowed for the predetermined app, the information about the network to which the terminal apparatus 101 is currently connected via Wi-Fi is successfully acquired by this API call. In other words, the network to which the terminal apparatus 101 is currently connected via Wi-Fi refers to the network to which the terminal apparatus 101 is connected via Wi-Fi when the third API is called.

If the use of the position information service is not allowed for the predetermined app, the information about the network to which the terminal apparatus 101 is currently connected via Wi-Fi fails to be acquired by this API call. If the terminal apparatus 101 is not currently connected to any network via Wi-Fi, the API call succeeds but the information about the network to which is terminal apparatus 101 is currently connected via Wi-Fi is not acquired.

Note that if the information about the AP is successfully acquired by the API call in step S401, the API for acquiring the information about the network to which the terminal apparatus 101 is currently connected via Wi-Fi does not need to be called in step S408. The information acquired by the API call in step S401 then may be used in the subsequent processing. In step S408, the CPU 103 further acquires information that can be acquired even without the use of the position information service being allowed for the predetermined app. Specifically, the CPU 103 acquires information about the Wi-Fi connection (wireless LAN connection) of the terminal apparatus 101 and information about the wired LAN connection of the terminal apparatus 101 as the information that can be acquired even without the use of the position information service being allowed for the predetermined app. Specific examples of the information about the Wi-Fi connection of the terminal apparatus 101 and the information about the wired LAN connection of the terminal apparatus 101 include information indicating whether Internet Protocol version 4 (IPv4) and Internet Protocol version 6 (IPv6) are enabled, and information indicating IP addresses, MAC addresses, and channels used for connection. If the terminal apparatus 101 has not established Wi-Fi connection, the information about the Wi-Fi connection of the terminal apparatus 101 is not acquired. If the terminal apparatus 101 has not established wired LAN connection, the information about the wired LAN connection of the terminal apparatus 101 is not acquired. Which network the terminal apparatus 101 is connected to is thus identified depending on whether the pieces of information are successfully acquired in this process. If the information about the network to which the terminal apparatus 101 is currently connected via Wi-Fi is successfully acquired by the call to the predetermined API, the wireless profile corresponding to the network to which the terminal apparatus 101 is currently connected via Wi-Fi may be acquired.

Wireless profiles are information that is managed by the OS and relates to networks to which the terminal apparatus 101 has been connected before. The wireless profiles include passwords for connecting to the networks. The CPU 103, by acquiring the wireless profile, can identify the password for the network to which the terminal apparatus 101 is currently connected via Wi-Fi without accepting the input of the password from the user on the predetermined app.

The processing for acquiring a wireless profile including a password is administrator-privileged processing.

Administrator-privileged processing is processing that can be executed based on execution of privilege elevation processing on an app with the user's permission. In the present embodiment, the processing for permitting an app to execute administrator-privileged processing is referred to as privilege elevation processing. The user's permission is granted, for example, by the user performing an input operation indicating the permission to execute the administrator-privileged processing on a screen displayed by a User Account Control (UAC) function. If the user account logged in to the terminal apparatus 101 is an administrator account, the input operation can be performed without password input to the screen displayed by the UAC function. If the user account logged in to the terminal apparatus 101 is not an administrator account, the input operation can be performed by inputting the administrator account's password to the screen displayed by the UAC function. In the present embodiment, the predetermined app is a desktop app. The predetermined app can thus acquire the wireless profile including the password if the privilege elevation processing is performed on the predetermined app. In the present embodiment, to acquire the wireless profile including the password, the privilege elevation processing has been performed on the predetermined app in advance. If the privilege elevation processing has not been performed on the predetermined app, a screen for executing the privilege elevation processing may be displayed by the UAC function. In a case where the screen is displayed, but the user does not grant the permission, the privilege elevation processing is not performed, and the predetermined app fails to acquire the password by executing the predetermined API, the CPU 103 may display an input screen for accepting password input using the predetermined app. In the connection setting processing, the password input to the input screen then may be used instead of the password to be acquired by executing the predetermined API.

In step S408, the CPU 103 may acquire not only the wireless profile corresponding to the network to which the terminal apparatus 101 is currently connected via Wi-Fi but other wireless profiles as well. Specifically, for example, the CPU 103 may acquire wireless profiles corresponding to the respective wireless networks included in the list of wireless networks that the terminal apparatus 101 can access, indicated by the information acquired from the OS by the calls to the first and second APIs.

The method for acquiring the wireless profile is not limited to the foregoing. For example, the CPU 103 may request all wireless profiles managed and stored in the terminal apparatus 101 from the OS. The terminal apparatus 101 then may identify the wireless profile corresponding to the network to which the terminal apparatus 101 is currently connected via Wi-Fi from the plurality of wireless profiles acquired. Similarly, the CPU 103 may identify wireless profiles corresponding to the wireless networks included in the list of wireless networks that the terminal apparatus 101 can access from the plurality of wireless profiles acquired.

The information acquired in step S408 is not limited to the foregoing. Only some of the foregoing pieces of information may be acquired. Other information may be acquired as well. Specifically, for example, the wireless profile does not need to be acquired. The SSID included in the wireless profile may be acquired without the password. For example, the information acquired in step S401 and the information acquired in step S408 may be different because different APIs are called in steps S401 and S408.

In step S409, the CPU 103 searches the network to which the terminal apparatus 101 is connected, identified in step S408, for communication apparatuses 151 corresponding to the predetermined app. Examples of the communication apparatuses 151 corresponding to the predetermined app include communication apparatuses 151 provided by the same vendor as that of the predetermined app. The CPU 103 then displays a selection screen for selecting a communication apparatus 151 from one or more communication apparatuses 151 discovered by the search. Fig. 5B illustrates a selection screen 510, which is an example of the selection screen displayed in step S409. The selection screen 510 includes an area 511 that is an area for displaying one or more communication apparatuses 151 discovered by the search.

The area 511 may display information indicating one or more communication apparatuses 151 that are not discovered by the foregoing search but to which the terminal apparatus 101 has been connected in the past. Specifically, the information displayed in the area 511 includes the product names, part of the serial numbers, and the IP addresses and MAC addresses of the communication apparatuses 151, for example. The user, by operating the area 511, selects a communication apparatus 151 from the one or more communication apparatuses 151 discovered by the search or the one or more communication apparatuses 151 that are not discovered by the search but to which the terminal apparatus 101 has been connected in the past. The selection screen 510 also includes an area 512 for the user to operate when the communication apparatus 151 that is the user-desired repair target is not found among the one or more communication apparatuses 151 displayed in the area 511. When any communication apparatus 151 is selected by operating the area 511 or when the area 512 is selected, an area 513 is enabled to accept user operation. When the area 513 is operated, the processing proceeds to step S410.

In step S410, the CPU 103 determines whether a communication apparatus 151 discovered on the network to which the terminal apparatus 101 is connected is selected on the selection screen 510. If a communication apparatus 151 that is not discovered by the search but to which the terminal apparatus 101 has been connected in the past is selected, or if the area 512 is selected, the determination is no.

If the determination is yes (YES in step S410), the processing proceeds to step S416. If the determination is no (NO in step S410), the processing proceeds to step S411.

In step S411, the CPU 103 determines whether to execute the connection setting processing. Specifically, in step S411, the CPU 103 determines whether the terminal apparatus 101 is currently connected to the network via Wi-Fi. The CPU 103 also determines whether the function for using IPv4 is enabled on the terminal apparatus 101. Such determinations are made using the information acquired in step S408. Both determinations being yes corresponds to the case where the connection setting processing is determined to be executed. At least one of the determinations being no corresponds to the case where the connection setting processing is determined to not be executed. If the determination is yes (YES in step S411), the processing proceeds to step S413. If the determination is no (NO in step S411), the processing proceeds to step S412.

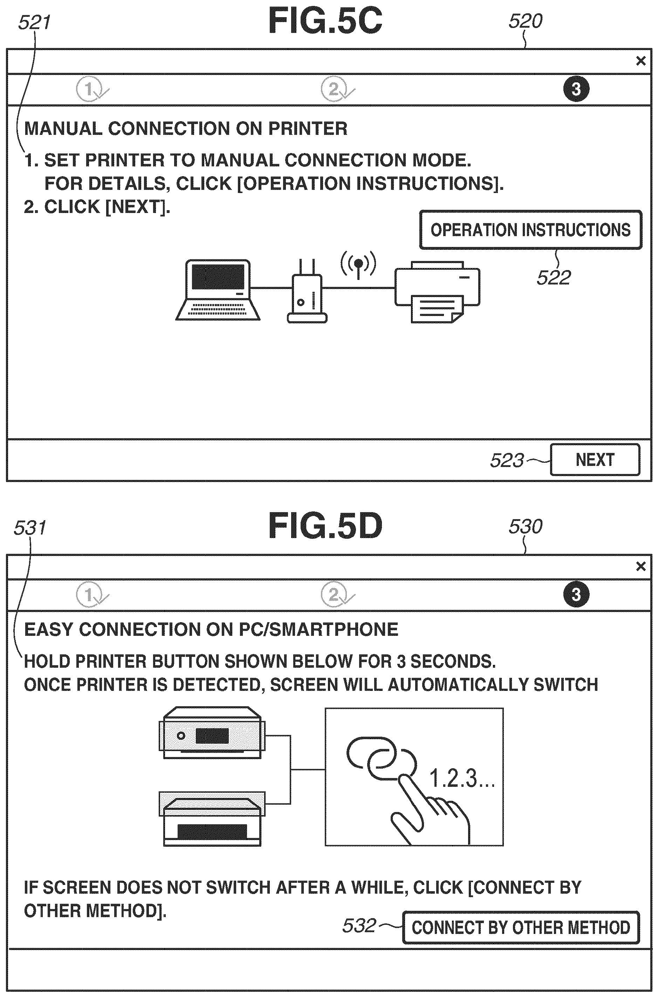

In step S412, the CPU 103 displays a guide screen regarding manual connection as processing for manual connection. In the present embodiment, manual connection refers to establishing connection between an AP and the communication apparatus 151 without the communication apparatus 151 receiving setting information from the terminal apparatus 101. Specifically, in manual connection, the communication apparatus 151 searches for APs nearby based on operations on the communication apparatus 151, displays a list of APs discovered, and connects to an AP selected from the list. Fig. 5C illustrates a guide screen 520, which is an example of the guide screen displayed in step S412. The guide screen 520 includes an area 521 that is an area including a message indicating an operation method for performing manual connection on the communication apparatus 151. The guide screen 520 also includes an area 522 that is a button for displaying a web page indicating details of the operation method for performing manual connection on the communication apparatus 151. If the area 522 is operated, the CPU 103 launches a web browser and causes the web browser to display the web page indicating details of the operation method for performing manual connection on the communication apparatus 151.

Details of the operation method for performing manual connection on the communication apparatus 151 may be displayed on the guide screen 520 or other screens displayed by the predetermined app instead of the web browser. When an area 523 is operated, the processing proceeds to step S416.

In step S413, the CPU 103 displays a guide screen for operating the communication apparatus 151 in the connection setting mode as processing for executing the connection setting processing. Fig. 5D illustrates a guide screen 530, which is an example of the guide screen displayed in step S413. The guide screen 530 includes an area 531 that is an area including a message indicating an operation method for operating the communication apparatus 151 in the connection setting mode. The guide screen 530 may also include an area 532 that is a button for displaying the guide screen regarding manual connection. If the area 532 is operated, the processing proceeds to step S412 to display the guide screen regarding manual connection.

In step S414, the CPU 103 detects the communication apparatus 151 operating in the connection setting mode near the terminal apparatus 101. Specifically, in step S414, the CPU 103 calls the fourth API and thereby causes the OS to search for wireless networks that the terminal apparatus 101 can access. The CPU 103 then calls the first API to acquire information about a list of wireless networks that the terminal apparatus 101 can access from the OS. The CPU 103 then detects the network formed by the communication apparatus 151 operating in the connection setting mode from the list of wireless networks that the terminal apparatus 101 can access. The network formed by the communication apparatus 151 operating in the connection setting mode is, in other words, the network formed by the AP 156-a that is run by the communication apparatus 151 operating in the connection setting mode. The second API may be called instead of the first API. If any communication apparatus 151 is selected on the selection screen 510, the CPU 103 detects the communication apparatus 151 that is operating in the connection setting mode and agrees with the communication apparatus 151 selected on the selection screen 510. With the communication apparatus 151 operating in the connection setting mode successfully detected, the processing proceeds to step S415.

In step S415, the CPU 103 executes the connection setting processing with the communication apparatus 151. Details of this processing will be described below.

In step S416, the CPU 103 searches the network to which the terminal apparatus 101 is currently connected for the communication apparatus 151. If any communication apparatus 151 is selected on the selection screen 510, the CPU 103 searches for the communication apparatus 151 that agrees with the communication apparatus 151 selected on the selection screen 510. If the connection setting processing is executed in step S415, the CPU 103 searches for the target communication apparatus 151 of the connection setting processing. If there is no communication apparatus 151 on the network to which the terminal apparatus 101 is currently connected, no communication apparatus 151 is discovered by this search.

In step S417, the CPU 103 determines whether the communication apparatus 151 is discovered by the search performed in step S416. If the determination is yes (YES in step S417), the processing proceeds to step S419. If the determination is no (NO in step S417), the processing proceeds to step S418.

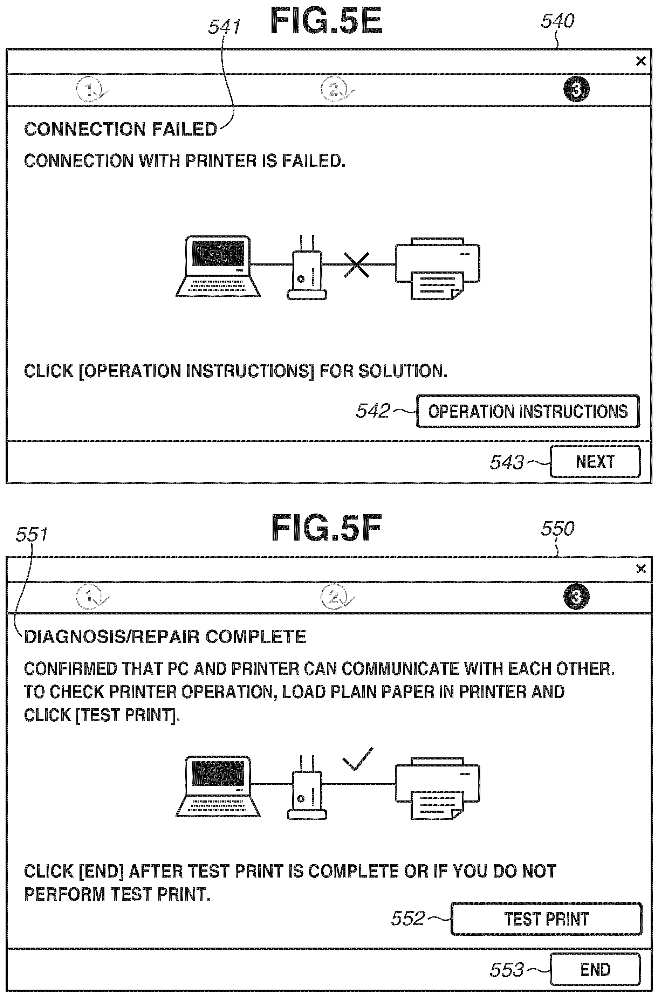

In step S418, the CPU 103 displays a failure screen indicating that the connection with the communication apparatus 151 is failed as a diagnostic result. In other words, a failure in the connection with the communication apparatus 151 means that the terminal apparatus 101 is unable to communicate with the communication apparatus 151 because the communication apparatus 151 is not discovered by the search performed in step S416. Fig. 5E illustrates a failure screen 540, which is an example of the failure screen displayed in step S418. The failure screen 540 includes an area 541 that displays a message indicating that the connection with the communication apparatus 151 is failed. The failure screen 540 also includes an area 542 that is a button for checking the network status of the communication apparatus 151. If the area 542 is operated, the CPU 103 launches the web browser and causes the web browser to display a web page indicating details of a method for checking the network status of the communication apparatus 151. For example, the method for checking the network status of the communication apparatus 151 includes printing information indicating the network status of the communication apparatus 151. The web page may further display a method for resolving the network trouble with reference to the printed information. Details of the method for checking the network status of the communication apparatus 151 may be displayed on the failure screen 540 or other screens displayed by the predetermined app instead of the web browser. When an area 543 is operated, the processing of this flowchart ends.

In step S419, the CPU 103 determines whether the use of the position information service is allowed for the predetermined app. This determination is made based on the information indicating the current settings related to allowing the use of the position information service for the predetermined app, stored in memory. In other words, this determination is made without calling a predetermined API. If information indicating that the setting corresponds to the use of the position information service not being allowed for the predetermined app is stored in memory in step S407, the determination is no. If step S407 is not performed and no such information is stored in memory, the determination is yes. However, such a configuration is not restrictive. A predetermined API may be called as in step S401, and the determination may be made based on the result of the call to the predetermined API as in step S402. If the determination is yes (YES in step S419), the processing proceeds to step S420. If the determination is no (NO in step S419), the processing proceeds to step S421.

In step S420, the CPU 103 acquires information about the radio wave condition between the terminal apparatus 101 and the AP to which the terminal apparatus 101 is currently connected (radio wave condition information about the terminal apparatus 101). The radio wave condition information about the terminal apparatus 101 is another piece of information that the predetermined app can acquire only if the use of the position information service is allowed for the predetermined app, and is acquired by a predetermined API. For example, the radio wave condition information about the terminal apparatus 101 includes information about the radio wave intensity of the communication between the terminal apparatus 101 and the AP. Specifically, the information about the radio wave intensity is information about the reception intensity of radio waves that the terminal apparatus 101 receives from the AP. In step S420, the CPU 103 acquires the information about the radio wave condition between each wireless network that the terminal apparatus 101 can access and the terminal apparatus 101 from the OS by calling the first API. In other words, the CPU 103 acquires a plurality of pieces of radio wave condition information from the OS. The CPU 103 then extracts the radio wave condition information corresponding to the network to which the terminal apparatus 101 is currently connected from the plurality of pieces of radio wave condition information acquired, whereby this process is implemented. Since the second and third APIs can also acquire the radio wave condition information about the terminal apparatus 101, these APIs may be called instead of the first API.

In step S421, the CPU 103 acquires information about the radio wave condition between the communication apparatus 151 and the AP to which the communication apparatus 151 is currently connected (radio wave condition information about the communication apparatus 151) from the communication apparatus 151. For example, the radio wave condition information about the communication apparatus 151 includes information about the radio wave strength of the communication between the communication apparatus 151 and the AP. Specifically, the information about the radio wave strength is information about the reception strength of radio waves that the communication apparatus 151 receives from the AP. Moreover, the radio wave information includes information about noise radio waves around the communication apparatus 151, for example. In the present embodiment, the information about noise radio waves refers to a signal to noise ratio (SNR) value measured by the communication apparatus 151. Since the radio wave condition information about the communication apparatus 151 is information acquired from the communication apparatus 151 through communication with the communication apparatus 151, the predetermined app can acquire the radio wave condition information about the communication apparatus 151 without calling a predetermined API.

In step S422, the CPU 103 displays a diagnostic result screen based on the radio wave condition information about the terminal apparatus 101 and the radio wave condition information about the communication apparatus 151, acquired in steps S420 and S421. Fig. 5F illustrates a diagnostic result screen 550, which is an example of the diagnostic result screen displayed in step S422. The diagnostic result screen 550 is a diagnostic result screen for situations where the radio wave strength of the communication between the terminal apparatus 101 and the AP and the radio wave strength of the communication between the communication apparatus 151 and the AP both exceed a threshold, and the radio wave condition of the terminal apparatus 101 and the radio wave condition of the communication apparatus 151 are both favorable. The diagnostic result screen 550 includes an area 551 that displays a message based on the radio wave condition of the terminal apparatus 101 and the radio wave condition of the communication apparatus 151. If the radio wave condition of the terminal apparatus 101 and the radio wave condition of the communication apparatus 151 are both favorable, the area 551 displays a message indicating that the terminal apparatus 101 and the communication apparatus 151 can communicate with each other. If either the radio wave strength of the communication between the terminal apparatus 101 and the AP or the radio wave strength of the communication between the communication apparatus 151 and the AP does not exceed the threshold, the area 551 displays a message indicating that the terminal apparatus 101 and the communication apparatus 151 are unable to communicate with each other or that the radio wave strength is weak. The diagnostic result screen 550 also includes a button 552 for causing the communication apparatus 151 to perform a test print. When the button 552 is operated, the CPU 103 transmits a print job for causing the communication apparatus 151 to perform a test print, and thereby causes the communication apparatus 151 to perform a test print. When an area 533 is operated, the processing of this flowchart ends.

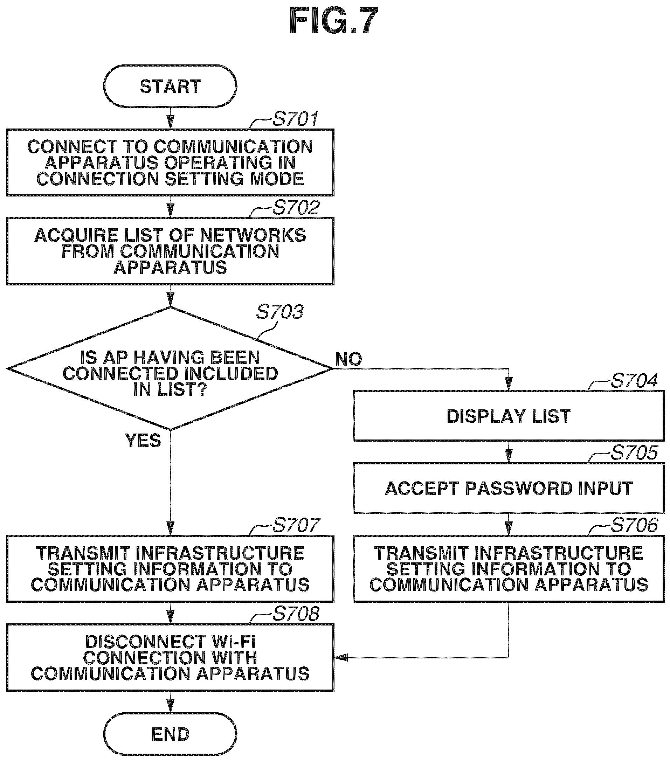

Fig. 7 is a flowchart illustrating an example of the connection setting processing executed by the terminal apparatus 101 using the predetermined app in the present embodiment. The processes in the flowchart of Fig. 7 are implemented by the CPU 103 loading the predetermined app stored in the ROM 104 or other memory into the RAM 105 and executing the predetermined app. The flowchart of Fig. 7 is one illustrating details of the connection setting processing executed in step S415.

In step S701, the CPU 103 disconnects the Wi-Fi connection between the terminal apparatus 101 and the network, and establishes a Wi-Fi connection between the communication apparatus 151 operating in the connection setting mode, detected in step S414, and the terminal apparatus 101.

In step S702, the CPU 103 acquires from the communication apparatus 151 a list of networks that are discovered by the search performed by the communication apparatus 151 and that the communication apparatus 151 can access.

In step S703, the CPU 103 determines whether the network to which the terminal apparatus 101 has been connected prior to the connection with the communication apparatus 151 operating in the connection setting mode is included in the received list. The network to which the terminal apparatus 101 has been connected prior to the connection with the communication apparatus 151 operating in the connection setting mode refers to the network to which the terminal apparatus 101 is connected when the operation for network repair is accepted from the user. Since the information about the network is already acquired in step S408, this determination is made based on the information acquired in step S408. If the determination is yes (YES in step S703), the processing proceeds to step S707. If the determination is no (NO in step S703), the processing proceeds to step S704.

In step S704, the CPU 103 displays the list received from the communication apparatus 151, and accepts the user's selection of one of the networks from the list.

In step S705, the CPU 103 displays an input screen for accepting input of a password for connecting to the network selected in step S704, using the predetermined app. If the password is already acquired by the acquisition of the wireless profile in step S408, this process may be omitted.

In step S706, the CPU 103 transmits information for connecting to the network selected in step S704 as infrastructure setting information. The infrastructure setting information transmitted here includes the password input to the input screen displayed in step S705, and information (such as an SSID) for identifying the network selected in step S704. If the password is acquired beforehand by the acquisition of the wireless profile in step S408, the password acquired by the acquisition of the wireless profile may be included in the infrastructure setting information. The infrastructure setting information transmitted here may include information indicating the authentication method, encryption method, and frequency bands used in the network selected in step S704. With the infrastructure setting information transmitted in step S706, the communication apparatus 151 connects to the network selected in step S704 using the infrastructure setting information. The processing then proceeds to step S708.

In step S707, the CPU 103 transmits information for connecting to the network to which the terminal apparatus 101 has been connected prior to the connection with the communication apparatus 151 as infrastructure setting information. The infrastructure setting information transmitted here includes the password acquired in step S408 and the information (such as an SSID) for identifying the network to which the terminal apparatus 101 has been connected prior to the connection with the communication apparatus 151. The infrastructure setting information transmitted here may include information indicating the authentication method, encryption method, and frequency bands used in the network to which the terminal apparatus 101 has been connected prior to the connection with the communication apparatus 151. With the infrastructure setting information transmitted in step S707, the communication apparatus 151 connects to the network to which the terminal apparatus 101 has been connected priorto the connection with the communication apparatus 151, using the infrastructure setting information.

In step S708, the CPU 103 disconnects the Wi-Fi connection between the terminal apparatus 101 and the communication apparatus 151. When the Wi-Fi connection is disconnected, connection between the network connectable using the wireless profile possessed by the terminal apparatus 101 and the terminal apparatus 101 is attempted by a reconnection function of the OS of the terminal apparatus 101. Here, connection between the network to which the terminal apparatus 101 has been connected prior to the connection with the communication apparatus 151 and the terminal apparatus 101 is attempted by the reconnection function. The terminal apparatus 101 is thereby reconnected to the network to which the terminal apparatus 101 has been connected prior to the connection with the communication apparatus 151. The connection between the network to which the terminal apparatus 101 has been connected priorto the connection with the communication apparatus 151 and the terminal apparatus 101 may be established not by the reconnection function of the OS of the terminal apparatus 101 but by the predetermined app instructing the OS to do so. Then the processing of this flowchart ends, and the processing proceeds to step S416.

Such a configuration enables appropriate determination of whether the use of the position information service is allowed for the predetermined app. Processing based on the determination of whether the use of the position information service is allowed for the predetermined app then can be appropriately performed.

In the foregoing description, the predetermined app is described to display the guide screen 500 based on the notification of a predetermined error resulting from the execution of the predetermined API. However, the predetermined app may display the guide screen 500 based on other factors. Specifically, for example, the predetermined app may display the guide screen 500 based on selection of a predetermined menu from menus displayed when a "help" tab displayed by the predetermined app is operated. Here, the predetermined app shall not execute the predetermined API based on the selection of the predetermined menu. In other words, when the predetermined menu is selected, the predetermined app displays the guide screen 500 without being based on notification of the predetermined error resulting from execution of the predetermined API. However, such a configuration is not restrictive. The predetermined app may execute the predetermined API when the predetermined menu is selected, and display the guide screen 500 based on notification of the predetermined error resulting from the execution of the predetermined API.

The foregoing description has dealt with the configuration where the predetermined app is a network repair app. However, such a configuration is not restrictive. The predetermined app may be an app intended for the connection setting processing that does not execute network repair processing such as displaying the diagnostic result screen but executes the connection setting processing. The predetermined app may have functions other than the connection setting processing. Specific examples of the other functions include a function of transmitting print jobs for causing the communication apparatus 151 to perform printing (print job transmission function) and a function of transmitting scan jobs for causing the communication apparatus 151 to perform scanning (scan job transmission function).

Up to this point, a configuration where the predetermined app is a desktop app has been described. However, such a configuration is not restrictive, and the predetermined app may be a UWP app. A second embodiment deals with a configuration where the predetermined app is a UWP app.

UWP apps are restricted from executing administrator-privileged processing. In the present embodiment, a terminal apparatus 101 includes a UWP app that is the predetermined app and a desktop app that is an app different from the predetermined app, and performs processing through cooperation of these apps. The UWP app that is the predetermined app will hereinafter be referred to as app A, and the desktop app that is an app different from the predetermined app as app B. In the present embodiment, app A is installed on the terminal apparatus 101 from outside using a store function provided by the vendor of the OS. App B is installed on the terminal apparatus 101 from outside using a web page provided by the vendor of app B. App B can be downloaded to and installed on the terminal apparatus 101 based on instructions from app A.

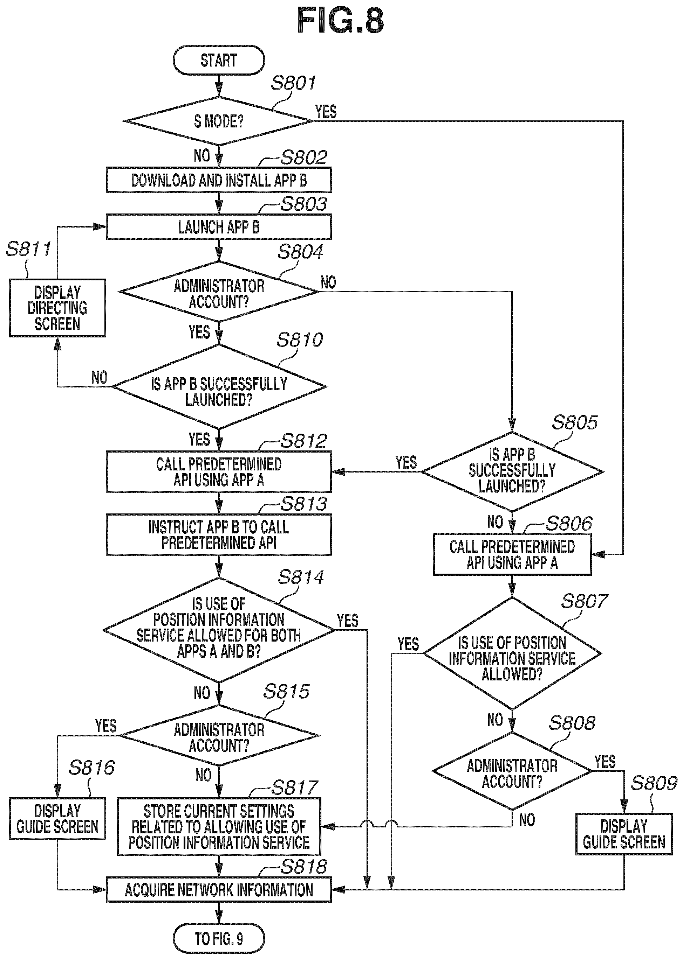

Fig. 8 is a flowchart illustrating an example of processing performed by the terminal apparatus 101 using the predetermined app in the present embodiment. The processes in the flowchart of Fig. 8 are implemented by a CPU 103 loading the predetermined app stored in a ROM 104 or other memory into a RAM 105 and executing the predetermined app. The flowchart of Fig. 8 is started based on acceptance of the user's operation for connection setting processing on a screen displayed by app A. The flowchart of Fig. 8 may be started in response to launching of app A.

In step S801, the CPU 103 determines whether the OS running on the terminal apparatus 101 is in S mode. S mode is a mode where some functions are restricted to enhance the security of the terminal apparatus 101. On the OS in S mode, UWP apps can be executed but not desktop apps. In other words, if the OS running on the terminal apparatus 101 is in S mode, app A can be executed but not app B. If the determination is yes (YES in step S801), the processing proceeds to step S806, i.e., to a procedure where various processes (including steps S802, S803, and S811) for executing app B are not performed. On the other hand, if the determination is no (NO in step S801), the processing proceeds to step S802.

In step S802, the CPU 103 downloads and installs app B based on instructions from app A.

In step S803, the CPU 103 attempts to launch app B. When the launching of app B is attempted, the OS displays a screen for privilege elevation processing using the UAC function. As described above, if the user account currently logged in to the terminal apparatus 101 is an administrator account, password input is not requested as an operation for the privilege elevation processing. On the other hand, if the user account currently logged in to the terminal apparatus 101 is not an administrator account, password input is requested as an operation for the privilege elevation processing. If the password that is input for the privilege elevation processing on the screen for the privilege elevation processing is wrong, an error is notified and password input is requested again. Moreover, if an operation indicating that app B is not permitted to execute the administrator-privileged processing is made, app B is not launched. If an operation indicating that app B is permitted to execute the administrator-privileged processing is made on the screen for the privilege elevation processing or the password input for the privilege elevation processing is correct, app B is launched.

In step S804, the CPU 103 identifies the type of user account currently logged in to the terminal apparatus 101, and determines whether the identified account is an administrator account (as opposed to a standard user account). If the determination is yes (YES in step S804), the processing proceeds to step S810. If the determination is no (NO in step S804), the processing proceeds to step S805.

In step S805, the CPU 103 determines whether app B is launched by the processing of step S803. If the determination is yes (YES in step S804), the processing proceeds to step S812. If the determination is no (NO in step S804), the processing proceeds to step S806 without displaying a directing screen for directing the user to permit app B to execute the administrator-privileged processing.

In step S806, the CPU 103 calls a predetermined API using app A. In the present embodiment, the first API among the first to fourth APIs is called in step S806. However, such a configuration is not restrictive, and any predetermined API may be called. Specifically, the third API may be called, for example. The processing that the OS perform when the predetermined API is called is as described in conjunction with step S401. In this process, since the predetermined API is called by app A, the notification from the OS differs depending on whether the use of the position information service is allowed for app A.

In step S807, the CPU 103 determines whether the use of the position information service is allowed for app A. This process is similar to step S402. More specifically, the CPU 103 determines whether the code corresponding to successful information access by the predetermined API is notified as a result of the call to the predetermined API. If the determination is yes (YES in step S807), the processing proceeds to step S818. If the determination is no (NO in step S807), the processing proceeds to step S808.

In step S808, the CPU 103 identifies the type of user account currently logged in to the terminal apparatus 101, and determines whether the identified account is an administrator account (as opposed to a standard user account). This process is similar to step S804. If the determination is yes (YES in step S808), the processing proceeds to step S809. If the determination is no (NO in step S808), the processing proceeds to step S817.

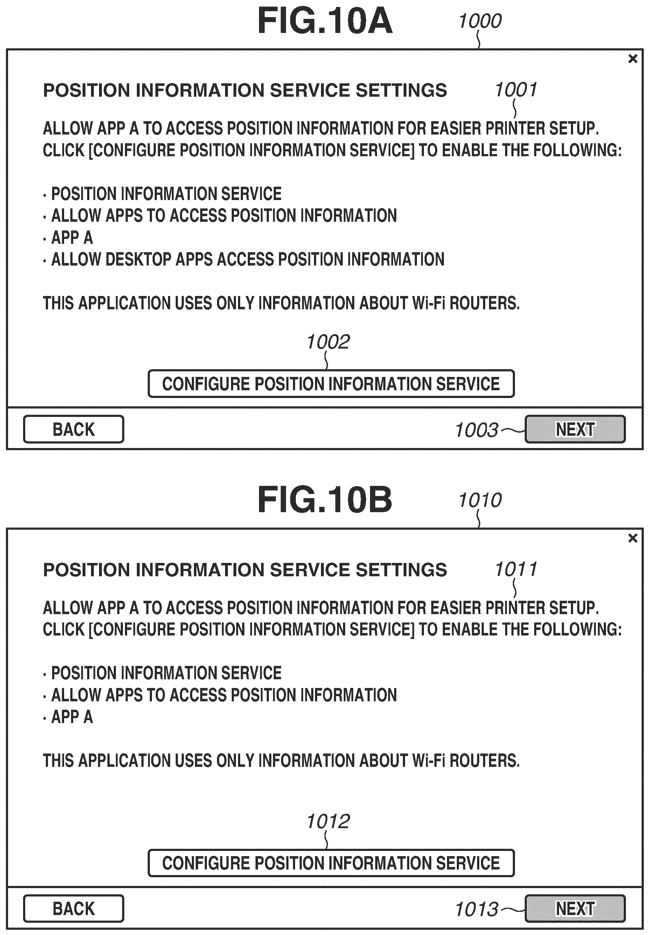

In step S809, the CPU 103 displays a guide screen for prompting the user to allow the use of the position information service for app A. Fig. 10B illustrates a guide screen 1010, which is an example of the guide screen illustrated in step S809. The guide screen 1010 includes an area 1011 that displays a message for prompting the user to allow the use of the position information service for app A and a message indicating operations for allowing the use of the position information service for app A. The guide screen 1010 may also include a message indicating information that app A acquires as information about the position information service. Specifically, in the present embodiment, the guide screen 1010 may include a message indicating that app A acquires information about APs (Wi-Fi routers) as the information about the position information service, for example. The guide screen 1010 also includes a button 1012 for displaying a setting screen 300. The button 1012 is similar to the button 502. The display of the guide screen 1010 is maintained even when the button 1012 is operated to display the setting screen 300. The user can thus operate a button 1013 included in the guide screen 1010 after allowing the use of the position information service for the predetermined app on the setting screen 300. When the button 1013 is operated, the processing proceeds to step S818.

In step S810, the CPU 103 determines whether app B is launched by the processing of step S803. This process is similar to step S805. If the determination is yes (YES in step S810), the processing proceeds to step S812. If the determination is no (NO in step S810), the processing proceeds to step S811.

In step S811, the CPU 103 displays the directing screen for directing the user to permit app B to execute the administrator-privileged processing. The reason why the directing screen is not displayed when the determination of step S805 is no but is displayed when the determination of step S810 is no is that with an administrator account, the execution of the administrator-privileged processing can be easily permitted to app B without password input. The processing then proceeds to step S803.

In step S812, the CPU 103 calls the predetermined API using app A. This process is similar to step S806.

In step S813, the CPU 103 instructs, using app A, app B to call the predetermined API. The instructed app B calls the predetermined API by the CPU 103. The processing that the OS performs when the predetermined API is called is as described in conjunction with step S401. In this process, since the predetermined API is called by app B, the notification from the OS differs depending on whether the use of the position information service is allowed for app B. App B accepts the notification and transmits the accepted notification to app A. By recognizing the notification content, app A can determine whether the use of the position information service is allowed for app B. In the present embodiment, app B is instructed to call the first API among the first to fourth APIs in step S813. However, such a configuration is not restrictive. App B may be instructed to call any predetermined API. Specifically, app B may be instructed to call the third API, for example.

In step S814, the CPU 103 determines whether the use of the position information service is allowed for both apps A and B. Whether the use of the position information service is allowed for app A is determined as in step S402. More specifically, the CPU 103 determines whether the code corresponding to successful information access by the predetermined API is notified as a result of the call to the predetermined API. Whether the use of the position information service is allowed for app B is determined by determining whether the notification content accepted by app B from the OS is the code corresponding to successful information access by the predetermined API. If the use of the position information service is allowed for both apps A and B and the determination is yes (YES in step S814), the processing proceeds to step S818. On the other hand, if the use of the position information service is not allowed for at least one of apps A and B and the determination is no (NO in step S814), the processing proceeds to step S815.

In step S815, the CPU 103 identifies the type of user account currently logged in to the terminal apparatus 101, and determines whether the identified account is an administrator account (as opposed to a standard user account). This process is similar to step S804. If the determination is yes (YES in step S815), the processing proceeds to step S816. If the determination is no (NO in step S815), the processing proceeds to step S817.

In step S816, the CPU 103 displays a guide screen for prompting the user to allow the use of the position information service for apps A and B. Fig. 10A illustrates a guide screen 1000, which is an example of the guide screen displayed in step S816. The guide screen 1000 is a screen for allowing the use of the position information service not only for app A but also for app B. The display content of the guide screen 1000 therefore differs in part from that of the guide screen 1010, which is the screen for allowing the use of the position information service for app A. The guide screen 1000 includes an area 1001 that displays a message for prompting the user to allow the use of the position information service for apps A and B, and a message indicating operations for allowing the use of the position information service for apps A and B. The guide screen 1000 may also include a message indicating information that apps A and B acquire as information about the position information service. Specifically, in the present embodiment, the guide screen 1000 may include a message indicating that apps A and B acquire information about APs (Wi-Fi routers) as the information about the position information service, for example. Moreover, the guide screen 1000 includes a button 1002 for displaying the setting screen 300. The button 1002 is similar to the button 502. The display of the guide screen 1000 is maintained even when the button 1002 is operated to display the setting screen 300. The user can thus operate a button 1003 included in the guide screen 1000 after allowing the use of the position information service for the predetermined apps on the setting screen 300. When the button 1003 is operated, the processing proceeds to step S818.

In step S817, the CPU 103 stores in memory the current settings related to allowing the use of the position information service for apps A and B. More specifically, the CPU 103 stores in memory the information indicating that the setting corresponds the use of the position information service not being allowed for apps A and B. The processing then proceeds to step S818.

Alternatively, step S817 may be skipped. More specifically, the procedure may be configured so that app A does not manage the current settings related to allowing the use of the position information service for apps A and B.

In step S818, the CPU 103 acquires information about the network to which the terminal apparatus 101 is currently connected via Wi-Fi. Specifically, in step S818, the CPU 103 calls the third API using app A. If the use of the position information service is allowed for app A, the information about the network to which the terminal apparatus 101 is currently connected via Wi-Fi is successfully acquired by this API call. In other words, the network to which the terminal apparatus 101 is currently connected via Wi-Fi refers to the network to which the terminal apparatus 101 is connected via Wi-Fi when the third API is called. If the use of the position information service is not allowed for app A, the information about the network to which the terminal apparatus 101 is currently connected via Wi-Fi fails to be acquired by this API call. If the terminal apparatus 101 is not currently connected to any network via Wi-Fi, the API call succeeds but the information about the network to which the terminal apparatus 101 is currently connected via Wi-Fi is not acquired. If the information about the AP has been successfully acquired by the API call in step S806 or S812, the API for acquiring the information about the network to which the terminal apparatus 101 is currently connected via Wi-Fi does not need to be called. The information acquired by the API call in step S806 or S812 then may be used in the substrate processing. Alternatively, the third API may be called by app B instead of app A. App A then may acquire from app B the information that is acquired by app B calling the third API.

Moreover, in step S818, the CPU 103 detects (discovers) the communication apparatus 151 that is located near the terminal apparatus 101 and operating in the connection setting mode. Specifically, in step S818, the CPU 103 calls the fourth API using app A, and thereby causes the OS to search for wireless networks that the terminal apparatus 101 can access. The CPU 103 then calls the first API using app A, and thereby acquires information about the list of wireless networks that the terminal apparatus 101 can access from the OS. The CPU 103 then detects the AP formed by the communication apparatus 151 operating in the connection setting mode from the list of wireless networks that the terminal apparatus 101 can access. Alternatively, the second API may be called instead of the first API. The first or second API may be called by app B instead of app A. App A then may acquire from app B the information that is acquired by app B calling the first or second API.

In step S818, the CPU 103 further acquires the wireless profile corresponding to the network to which the terminal apparatus 101 is currently connected via Wi-Fi. Specifically, in step S818, if app B is known to have been launched, the CPU 103 instructs app B via app A to acquire the wireless profile corresponding to the network to which the terminal apparatus 101 is currently connected via Wi-Fi. The instructed app B initially calls the third API to acquire identification information about the network to which the terminal apparatus 101 is currently connected via Wi-Fi. App B then acquires from the OS the wireless profile corresponding to the network to which the terminal apparatus 101 is currently connected via Wi-Fi by requesting the wireless profile from the OS with the acquired identification information specified. The processing for acquiring a wireless profile including a password is administrator-privileged processing. When app B is running, app B is permitted to execute administrator-privileged processing. The wireless profile acquired by app B here is thus one including a password. App B then transmits the acquired wireless profile to app A. In such a manner, app A acquires wireless profiles. If the use of the position information service is not allowed for app B, app B is unable to acquire the identification information by calling the third API. As a result, app B is unable to perform the acquisition of the wireless profile with the identification information specified, and both apps A and B fail to acquire the wireless profile. Such a configuration is not restrictive. If the use of the position information service is known to be disallowed for app B, the CPU 103 may call the third APP using app A and acquire the identification information via app A. App A then may acquire from the OS the wireless profile corresponding to the network to which the terminal apparatus 101 is currently connected via Wi-Fi by requesting the wireless profile from the OS with the acquired identification information specified. If, in step S818, app B is known to not have been launched, the CPU 103 also calls the third API using app A and acquires the identification information via app A. App A then acquires from the OS the wireless profile corresponding to the network to which the terminal apparatus 101 is currently connected via Wi-Fi by requesting the wireless profile from the OS with the acquired identification information specified. Since app A is unable to execute administrator-privileged processing, the wireless profile acquired by app A does not include a password. In such a case, the CPU 103 may display an input screen for accepting password input, using the predetermined app. In the connection setting processing, the password input from the input screen then may be used instead of the password to be acquired by the execution of the predetermined API.

When the use of the position information service is not allowed for app A, app A is unable to acquire identification information by calling the third API. As a result, app A is unable to perform the acquisition of the wireless profile with the identification information specified, and both apps A and B fail to acquire the wireless profile.

In step S818, the CPU 103 may acquire not only the wireless profile corresponding to the network to which the terminal apparatus 101 is currently connected via Wi-Fi, but other wireless profiles as well. Specifically, for example, the CPU 103 may acquire wireless profiles corresponding to the respective wireless networks included in the list of wireless networks that the terminal apparatus 101 can access, indicated by the information acquired from the OS by calling the first or second API.

The method for acquiring the wireless profile is not limited to the foregoing. For example, the CPU 103 may request all wireless profiles managed and stored in the terminal apparatus 101 from the OS. The wireless profile corresponding to the network to which the terminal apparatus 101 is currently connected via Wi-Fi then may be identified from the plurality of wireless profiles thus acquired. Similarly, wireless profiles corresponding to the respective wireless networks included in the list of wireless networks that the terminal apparatus 101 can access may be identified from the plurality of wireless profiles thus acquired.

In step S818, the CPU 103 further acquires information that can be acquired even without the use of the position information service being allowed for app A or B. Specifically, the CPU 103 acquires information about the Wi-Fi connection (wireless LAN connection) of the terminal apparatus 101 and information about the wired LAN connection of the terminal apparatus 101 as the information that can be acquired even without the use of the position information service being allowed for app A or B. Specific examples of the information about the Wi-Fi connection of the terminal apparatus 101 and the information about the wired LAN connection of the terminal apparatus 101 include information indicating whether IPv4 and IPv6 are enabled, and information indicating IP addresses, MAC addresses, and channels used for the connections. If the terminal apparatus 101 has not established Wi-Fi connection, the information about the Wi-Fi connection of the terminal apparatus 101 is not acquired. If the terminal apparatus 101 has not established wired LAN connection, the information about the wired LAN connection of the terminal apparatus 101 is not acquired. Which network the terminal apparatus 101 is connected to is thus identified depending on whether the pieces of information are successfully acquired in this process.

In step S818, the CPU 103 searches the network to which the terminal apparatus 101 is connected for communication apparatuses 151 corresponding to the predetermined app. Examples of the communication apparatuses 151 corresponding to the predetermined app include ones provided by the same vendor as that of the predetermined app.

The information acquired in step S818 is not limited thereto. Only some of the pieces of information described above may be acquired. Other information may be acquired as well. Specifically, the wireless profile does not need to be acquired, for example. The SSID included in the wireless profile may be acquired without the password. For example, different APIs may be called in steps S812 and S813 and in step S818, so that the information acquired in steps S812 and S813 and the information acquired in step S818 are different.

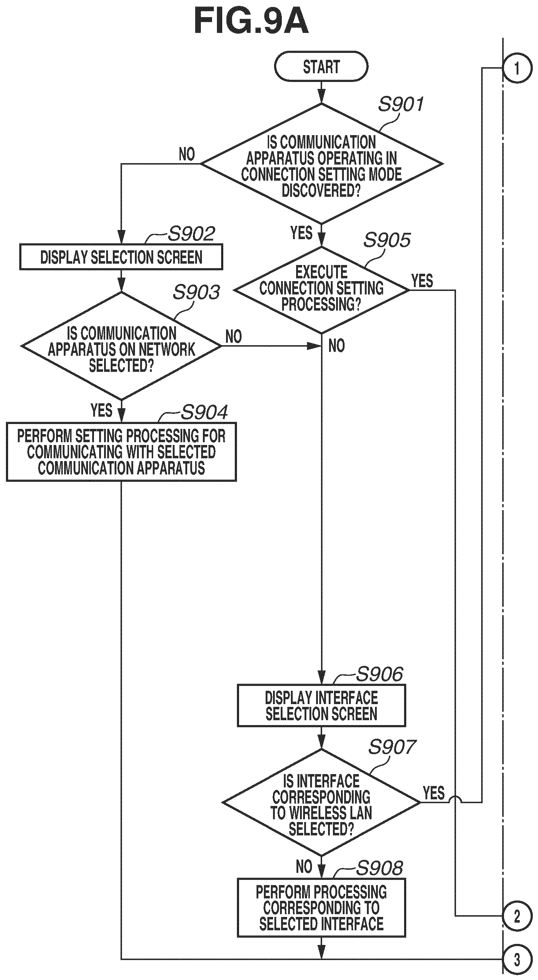

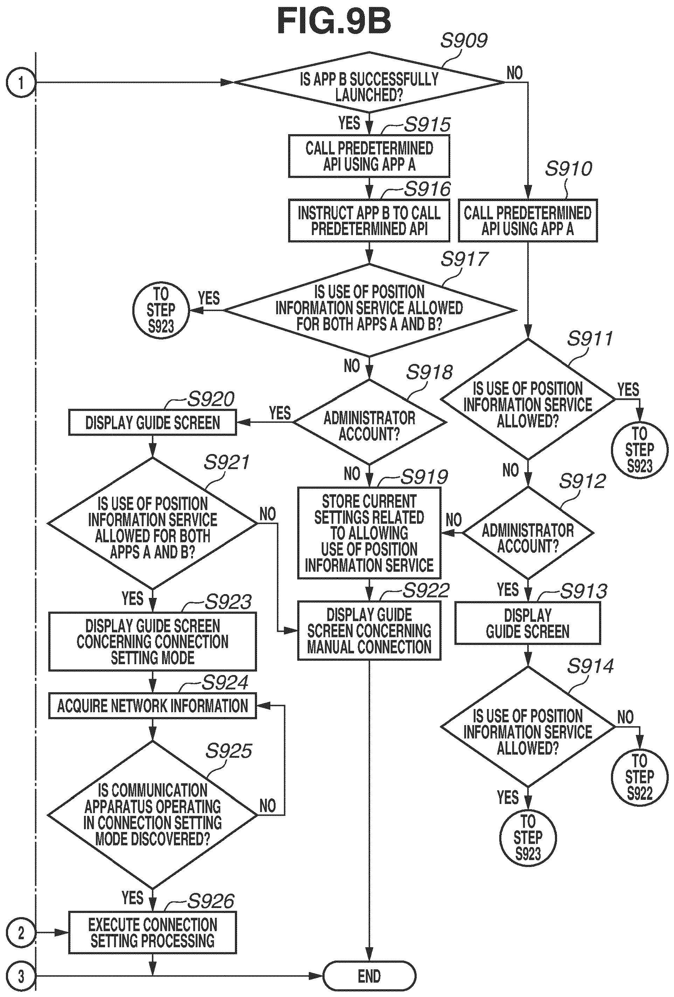

The processing of this flowchart ends. The CPU 103 then starts the processing of the flowchart illustrated in Figs. 9A and 9B.

Figs. 9A and 9B are a flowchart illustrating an example of processing performed by the terminal apparatus 101 using the predetermined app in the present embodiment. The processes in the flowchart of Figs. 9A and 9B are implemented by the CPU 103 loading the predetermined app stored in the ROM 104 or other memory into the RAM 105 and executing the predetermined app. The flowchart of Figs. 9A and 9B is started based on the end of the processing of the flowchart in Fig. 8.

In step S901, the CPU 103 determines whether the communication apparatus 151 operating in the connection setting mode is discovered by the processing of step S818. If the determination is yes (YES in step S901), the processing proceeds to step S905. If the determination is no (NO in step S901), the processing proceeds to step S902.

In step S902, the CPU 103 displays a selection screen for selecting a communication apparatus 151 from the one or more communication apparatuses 151. This process is similar to step S409. The communication apparatus(es) 151 corresponding to the predetermined app on the network to which terminal apparatus 101 is connected is/are searched for in step S818.

In step S903, the CPU 103 determines whether the communication apparatus 151 discovered on the network to which the terminal apparatus 101 is connected is selected on the selection screen 510. This process is similar to step S410. If the determination is yes (YES in step S903), the processing proceeds to step S904. If the determination is no (NO in step S903), the processing proceeds to step S906.

In step S904, the CPU 103 performs various types of setting processing for communicating with the communication apparatus 151 selected on the selection screen 510. Specifically, for example, the CPU 103 performs processing for installing a printer driver corresponding to the communication apparatus 151 on the terminal apparatus 101. Then the processing of this flowchart ends.

In step S905, which is performed if the determination of step S901 is yes, the CPU 103 determines whether to execute the connection setting processing. Specifically, in step S905, the CPU 103 determines whether the terminal apparatus 101 is currently connected to the network via Wi-Fi. The CPU 103 also determines whether the function for using IPv4 is enabled on the terminal apparatus 101. Furthermore, the CPU 103 determines whether the wireless profile corresponding to the network to which the terminal apparatus 101 is currently connected via Wi-Fi is successfully acquired. Such determinations are made using the information acquired in step S818. All the determinations being yes corresponds to the case where the connection setting processing is determined to be executed. At least one of the determinations being no corresponds to the case where the connection setting processing is determined to not be executed. If the determination is yes (YES in step S905), the processing proceeds to step S926. If the determination is no (NO in step S905), the processing proceeds to step S906.

In step S906, the CPU 103 displays an interface selection screen for accepting the user's selection of the interface to be used for connection between the terminal apparatus 101 and the communication apparatus 151. In the present embodiment, the interface selection screen enables selection of any one of an interface corresponding to wireless LAN, an interface corresponding to wired LAN, and an interface corresponding to USB. In other words, the interface selection screen is a screen for selecting the connection method between the terminal apparatus 101 and the communication apparatus 151. Any one of wireless LAN, wired LAN, and USB is selected as the connection method.

In step S907, the CPU 103 determines whether the interface corresponding to wireless LAN is selected on the interface selection screen. If the determination is yes (YES in step S907), the processing proceeds to step S909. If the determination is no (NO in step S907), the processing proceeds to step S908. Specifically, the determination being no corresponds to the case where the interface selected on the interface selection screen is the interface corresponding to wired LAN or the interface corresponding to USB.

In step S908, which is performed if the determination of step S907 is no, the CPU 103 performs processing corresponding to the interface selected on the interface selection screen. Specifically, for example, the CPU 103 displays a screen for prompting the user to establish connection between the terminal apparatus 101 and the communication apparatus 151 using the interface selected on the interface selection screen. The CPU 103 searches the network to which the interface selected on the interface selection screen is connected for the communication apparatus 151. If the communication apparatus 151 is discovered, the CPU 103 configures various settings to enable communication with the communication apparatus 151 using the interface selected on the interface selection screen. Specifically, for example, the CPU 103 performs processing for installing the printer driver corresponding to the communication apparatus 151 on the terminal apparatus 101. Then the processing of this flowchart ends.

In step S909, which is performed if the determination of step S907 is yes, the CPU 103 determines whether app B is launched by the processing of step S803. This process is similar to step S805. If the determination is yes (YES in step S909), the processing proceeds to step S915. If the determination is no (NO in step S909), the processing proceeds to step S910.

In step S910, which is performed if the determination of step S909 is no, the CPU 103 calls the predetermined API using app A. This process is similar to step S806.

In step S911, the CPU 103 determines whether the use of the position information service is allowed for app A. This process is similar to step S807. If the determination is yes (YES in step S911), the processing proceeds to step S923. If the determination is no (NO in step S911), the processing proceeds to step S912.

In step S912, which is performed if the determination of step S910 is no, the CPU 103 identifies the type of user account currently logged in to the terminal apparatus 101, and determines whether the identified account is an administrator account (or a standard user account).

This process is similar to step S804. If the determination is yes (YES in step S912), the processing proceeds to step S913. If the determination is no (NO in step S912), the processing proceeds to step S919.

In step S913, which is performed if the determination of step S912 is yes, the CPU 103 displays the guide screen for prompting the user to allow the use of the position information service for app A. This process is similar to step S809. When the button 1013 is operated, the processing proceeds to step S914.

In step S914, the CPU 103 determines again whether the use of the position information service is allowed for app A. This process is similar to step S911. If the user allows the use of the position information service for app A based on the display of the guide screen in step S912, the determination is yes. If the determination is yes (YES in step S914), the processing proceeds to step S923. If the determination is no (NO in step S914), the processing proceeds to step S922.

In step S915, which is performed if the determination of step S909 is yes, the CPU 103 calls the predetermined API using app A. This process is similar to step S806.

In step S916, the CPU 103 instructs, using app A, app B to call the predetermined API. This process is similar to step S813.

In step S917, the CPU 103 determines whether the use of the position information service is allowed for both apps A and B. This process is similar to step S814. If the determination is yes (YES in step S917), the processing proceeds to step S923. If the determination is no (NO in step S917), the processing proceeds to step S918.

In step S918, which is performed if the determination of step S917 is no, the CPU 103 identifies the type of user account currently logged in to the terminal apparatus 101, and determines whether the identified account is an administrator account (or a standard user account).

This process is similar to step S804. If the determination is yes (YES in step S918), the processing proceeds to step S920. If the determination is no (NO in step S918), the processing proceeds to step S919.

In step S919, which is performed if the determination of step S912 is no or if the determination of step S918 is no, the CPU 103 stores in memory the current settings related to allowing the use of the position information service for apps A and B. In other words, the CPU 103 stores in memory the information indicating that the setting corresponds to the use of the position information service not being allowed for apps A and B. The processing then proceeds to step S922. Alternatively, step S919 may be skipped. More specifically, the procedure may be configured so that app A does not manage the current settings related to allowing the use of the position information service for apps A and B. In such a configuration, if the determination of step S912 is no or if the determination of step S918 is no, the processing proceeds to step S922 without step S919 being performed.

In step S920, which is performed if the determination of step S918 is yes, the CPU 103 displays the guide screen for prompting the user to allow the use of the position information service for apps A and B. This process is similar to step S816. When the button 1013 is operated, the processing proceeds to step S921.

In step S921, the CPU 103 determines again whether the use of the position information service is allowed for both apps A and B. This process is similar to step S917. If the user allows the use of the position information service for app A based on the display of the guide screen in step S912, the determination is yes. If the determination is yes (YES in step S921), the processing proceeds to step S923. If the determination is no (NO in step S921), the processing proceeds to step S922.

In step S922, which is performed if the determination of step S914 is no or if the determination of step S921 is no, the CPU 103 displays the guide screen regarding manual connection as the processing for manual connection. This process is similar to step S412. Then the processing of this flowchart ends.

As described above, step S923 is performed if the determination of step S911 is yes, if the determination of step S914 is yes, if the determination of step S917 is yes, or if the determination of step S921 is yes. In step S923, the CPU 103 displays the guide screen for operating the communication apparatus 151 in the connection setting mode as the processing for executing the connection setting processing. This process is similar to step S413. The guide screen displayed in step S923 may include a button for connecting the CPU 151 to a network without executing the connection setting processing. When the button is operated, the processing may proceed to step S922.

In step S924, the CPU 103 acquires the information about the network to which the terminal apparatus 101 is currently connected via Wi-Fi. This process is similar to step S818.

In step S925, the CPU 103 determines whether the communication apparatus 151 operating in the connection setting mode is discovered by the processing of step S924. This process is similar to step S901.

If the determination is yes (YES in step S925), the processing proceeds to step S926. If the determination is no (NO in step S925), the processing returns to step S924, and the CPU 103 continues searching for the communication apparatus 151 operating in the connection mode.

In step S926, the CPU 103 executes the connection setting processing with the communication apparatus 151. This process is similar to step S415. If step S926 is performed after step S925, the communication apparatus 151 to execute the connection setting processing with and to which the terminal apparatus 101 is connected in step S701 is the communication apparatus 151 that is operating in the connection setting mode and discovered in step S924. If step S926 is performed after the yes determination in step S905, the communication apparatus 151 to execute the connection setting processing with and to which the terminal apparatus 101 is connected in step S701 is the communication apparatus 151 that is operating in the connection setting mode and discovered in step S818. In the connection setting processing executed in step S926, the information acquired in step S818 or S924 is used instead of the information described to be acquired in step S408 in the description of the flowchart of Fig. 7. Then the processing of this flowchart ends.

With such a configuration, whether the use of the position information service is allowed for app B can be determined using app A. If the use of the position information service is determined to not be allowed for app B, the processing for allowing the use of the position information service for app B can be performed using app A.

In the foregoing description, the predetermined app is described to be a UWP app. However, such a configuration is not restrictive. For example, the predetermined app may be an app constituted by packaging a UWP app with a desktop app using a mechanism such as Desktop Bridge. The desktop app to be packaged here is one different from app B, and app B is installed on the terminal apparatus 101 separately from the desktop app to be packaged. With such a configuration, the predetermined app includes a module corresponding to the UWP app and a module corresponding to the desktop app. With this configuration, the processing of the flowcharts of Figs. 8 and 9 may be implemented by the module corresponding to the desktop app among the modules included in the predetermined app. In other words, the processing described to be performed by the predetermined app in the flowcharts of Figs. 8 and 9 may be processing performed by the module corresponding to the desktop app in the predetermined app. The module corresponding to the desktop app in the predetermined app can perform the processing even if the OS running on the terminal apparatus 101 is an S-mode OS (i.e. an operating system that is streamlined for security and performance, and which only allows the installation of pre-approved apps from a predetermined secure app store).

### <Other Exemplary Embodiments>

The foregoing embodiments have dealt with the configuration where the communication apparatus 151 operating in the connection setting mode and the terminal apparatus 101 are connected via Wi-Fi. However, such a configuration is not restrictive. The connection between the communication apparatus 151 operating in the connection setting mode and the terminal apparatus 101 may be established by a communication method other than Wi-Fi, such as Bluetooth^{®} Classic and Bluetooth^{®} Low Energy, for example. In such a configuration, the terminal apparatus 101 may maintain the Wi-Fi connection with the AP while the communication apparatus 151 operating in the connection setting mode and the terminal apparatus 101 are connected. In such a configuration, the predetermined API is not used in the processing for searching for the communication apparatus 151 operating in the connection setting mode, but is used in the processing for acquiring the information about the AP to which the terminal apparatus 101 is connected. The determination of whether the use of the position information service is allowed for the predetermined app is thus performed for that purpose.

An embodiment of the present disclosure can also be achieved by supplying a storage medium in which software program code for implementing the functions of the foregoing embodiments is stored to a system or an apparatus. In other words, this embodiment can be achieved by a computer (or CPU or MPU) of the system or apparatus reading the program code stored in the storage medium and executing the program. In such a case, the program code itself read from the storage medium implements the functions of the foregoing embodiments, and the storage medium storing the program code constitutes an embodiment of the present disclosure.

Examples of the storage medium that can be used to supply the program code include a flexible disk, a hard disk, an optical disc, a magneto-optic disc, a Compact Disc Read-Only Memory (CD-ROM), a Compact Disc-Recordable (CD-R), a magnetic tape, a nonvolatile memory card, a ROM, and a Digital Versatile Disc (DVD).

It will be understood that embodiments of the present disclosure also include a case where the OS running on the computer performs part or all of the actual processing based on instructions from the program code read by the computer and the functions of the foregoing embodiments are implemented by such processing.

An embodiment of the present disclosure includes the following configurations.

### (Item 1)

A first application program for causing a computer of an information processing apparatus to function as an instruction unit configured to instruct a second application program different from the first application program to call a predetermined API configured to acquire predetermined information from an OS of the information processing apparatus, the predetermined information being acquired by the information processing apparatus using a wireless LAN function, a first determination unit configured to determine whether acquisition of the predetermined information by the second application program calling the predetermined API is successful, and a first execution unit configured to not execute specific processing based on a success in the acquisition of the predetermined information by the second application program and execute the specific processing based on a failure in the acquisition of the predetermined information by the second application program, the specific processing being configured to have a user perform an operation for allowing use of position information service for the second application program, wherein in a case where the use of the position information service is allowed for the second application program, the second application program calling the predetermined API is able to acquire the predetermined information, and wherein in a case where the use of the position information service is not allowed for the second application program, the second application program calling the predetermined API is not able to acquire the predetermined information.

### (Item 2)

The program according to item 1, further causing the computer to function as a second determination unit configured to determine whether a user account logged in to the information processing apparatus is an administrator account, wherein the specific processing is executed based on the failure in the acquisition of the predetermined information by the second application program and a determination that the user account logged in to the information processing apparatus is the administrator account.

### (Item 3)

The program according to item 2, wherein in a case where the user account logged in to the information processing apparatus is determined to not be the administrator account, the specific processing is not executed even with the use of the position information service not allowed for the second application program.

### (Item 4)

The program according to any one of items 1 to 3, further causing the computer to function as a reception unit configured to receive, using the first application program, the predetermined information acquired by the second application program calling the predetermined API, and a second execution unit configured to execute connection setting processing using the received predetermined information, the connection setting processing being configured to connect a communication apparatus outside the information processing apparatus to one network.

### (Item 5)

The program according to item 4, wherein the predetermined information acquired by the second application program calling the predetermined API includes a password for one network, and wherein the connection setting processing includes processing for transmitting information including a password for one network to the communication apparatus.

### (Item 6)

The program according to item 5, further causing the computer to function as a display control unit configured to, in a case where the use of the position information service is not allowed for the second application program despite execution of the specific processing, display an input screen configured to accept input of a password, and in a case where the use of the position information service is allowed for the second application program after the execution of the specific processing, not display the input screen, wherein in a case where the input screen is displayed, the connection setting processing includes processing for transmitting information including the password input to the input screen to the communication apparatus.

### (Item 7)

The program according to any one of items 4 to 6, wherein the predetermined information to be used in the connection setting processing is acquired by the predetermined API called after whether the acquisition of the predetermined information by the second application program is successful is determined.

### (Item 8)

The program according to any one of items 4 to 7, wherein the predetermined API used in acquiring the predetermined information used to determine whether the acquisition of the predetermined information by the second application program is successful and the predetermined API used in acquiring the predetermined information used in the connection setting processing are different.

### (Item 9)

The program according to any one of items 4 to 8, further causing the computer to function as a calling unit configured to call the predetermined API by the first application program, wherein the connection setting processing is executed using the predetermined information acquired by the predetermined API called by the first application program as well.

### (Item 10)

The program according to item 9, wherein the predetermined information that is used in the connection setting processing and acquired by the first application program calling the predetermined API includes information about a list of wireless networks accessible by the information processing apparatus, wherein the connection setting processing includes processing for detecting a network formed by the communication apparatus operating in a mode for the connection setting processing from the list of wireless networks accessible by the information processing apparatus, and processing for establishing connection between the network formed by the communication apparatus operating in the mode for the connection setting processing and the information processing apparatus, and wherein information for connecting the communication apparatus to one network is transmitted to the communication apparatus via the connection between the network formed by the communication apparatus operating in the mode for the connection setting processing and the information processing apparatus.

### (Item 11)

The program according to item 9 or 10, wherein the predetermined information that is used in the connection setting processing and acquired by the first application program calling the predetermined API includes information about a network to which the information processing apparatus is connected via a wireless LAN upon calling the predetermined API, and wherein the connection setting processing includes processing for transmitting information about the network to which the information processing apparatus is connected via the wireless LAN upon calling the predetermined API to the communication apparatus.

### (Item 12)

The program according to any one of items 9 to 11, further causing the computer to function as a third determination unit configured to determine whether acquisition of the predetermined information by the first application program calling the predetermined API is successful, and a third execution unit configured to not execute predetermined processing based on a success in the acquisition of the predetermined information by the first application program and execute the predetermined processing based on a failure in the acquisition of the predetermined information by the first application program, the predetermined processing being configured to have the user perform an operation for allowing the use of the position information service for the first application program, wherein in a case where the use of the position information service is allowed for the first application program, the first application program calling the predetermined API is able to acquire the predetermined information, and wherein in a case where the use of the position information service is not allowed for the first application program, the first application program calling the predetermined API is not able to acquire the predetermined information.

### (Item 13)

The program according to item 12, wherein the predetermined API used in acquiring the predetermined information used to determine whether the acquisition of the predetermined information by the first application program is successful and the predetermined API used in acquiring the predetermined information used in the connection setting processing are different.

### (Item 14)

The program according to any one of items 1 to 13, further causing the computer to function as a download unit configured to download the second application program to the information processing apparatus based on an instruction from the first application program, wherein after the second application program is downloaded to the information processing apparatus, the second application program is instructed to call the predetermined API.

### (Item 15)

The program according to any one of items 1 to 14, wherein the first application program is a UWP application program, and the second application program is a desktop application program.

### (Item 16)

The program according to any one of items 1 to 14, wherein the first application program is an application program constituted by packaging a UWP application program with a desktop application program, and the second application program is a desktop application program.

### (Item 17)

The program according to any one of items 1 to 16, wherein the specific processing is processing for displaying a screen configured to have the user perform the operation for allowing the use of the position information service for the second application program.

### (Item 18)

The program according to any one of items 1 to 17, further causing the computer to function as a transmission unit configured to transmit a print job to a communication apparatus outside the information processing apparatus, the print job being configured to cause the communication apparatus to perform printing.

### (Item 19)

The program according to any one of items 1 to 18, wherein the OS of the information processing apparatus is a Windows (registered trademark) OS.

### (Item 20)

The program according to any one of items 1 to 19, wherein the predetermined API is an API compatible with a Windows (registered trademark) OS, and is one of WlanGetAvailableNetworkList, WlanGetAvailableBSSList, WlanQueryInterface, and WlanScan.

### (Item 21)

An information processing apparatus including a first application program, the information processing apparatus including an instruction unit configured to instruct a second application program different from the first application program to call a predetermined API configured to acquire predetermined information from an OS of the information processing apparatus, the predetermined information being acquired by the information processing apparatus using a wireless LAN function, a first determination unit configured to determine whether acquisition of the predetermined information by the second application program calling the predetermined API is successful, and a first execution unit configured to not execute specific processing based on a success in the acquisition of the predetermined information by the second application program and execute the specific processing based on a failure in the acquisition of the predetermined information by the second application program, the specific processing being configured to have a user perform an operation for allowing use of position information service for the second application program, wherein in a case where the use of the position information service is allowed for the second application program, the second application program calling the predetermined API is able to acquire the predetermined information, and wherein in a case where the use of the position information service is not allowed for the second application program, the second application program calling the predetermined API is not able to acquire the predetermined information.

### (Item 22)

A control method of an information processing apparatus including a first application program, the control method including instructing a second application program different from the first application program to call a predetermined API configured to acquire predetermined information from an OS of the information processing apparatus, the predetermined information being acquired by the information processing apparatus using a wireless LAN function, determining, in first determining, whether acquisition of the predetermined information by the second application program calling the predetermined API is successful, and in first executing, not executing specific processing based on a success in the acquisition of the predetermined information by the second application program and executing the specific processing based on a failure in the acquisition of the predetermined information by the second application program, the specific processing being configured to have a user perform an operation for allowing use of position information service for the second application program, wherein in a case where the use of the position information service is allowed for the second application program, the second application program calling the predetermined API is able to acquire the predetermined information, and wherein in a case where the use of the position information service is not allowed for the second application program, the second application program calling the predetermined API is able to acquire the predetermined information.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

## Claims

1. A first application program for causing a computer of an information processing apparatus to function as:
instruction means for instructing a second application program different from the first application program to call a predetermined API for acquiring predetermined information from an OS of the information processing apparatus, the predetermined information being acquired by the information processing apparatus using a wireless LAN function;
first determination means for determining whether acquisition of the predetermined information by the second application program calling the predetermined API is successful; and
first execution means for not executing specific processing based on a success in the acquisition of the predetermined information by the second application program and executing the specific processing based on a failure in the acquisition of the predetermined information by the second application program, the specific processing being for having a user perform an operation for allowing use of position information service for the second application program,
wherein in a case where the use of the position information service is allowed for the second application program, the second application program calling the predetermined API is able to acquire the predetermined information, and
wherein in a case where the use of the position information service is not allowed for the second application program, the second application program calling the predetermined API is not able to acquire the predetermined information.

2. The program according to claim 1, further causing the computer to function as second determination means for determining whether a user account logged in to the information processing apparatus is an administrator account,
wherein the specific processing is executed based on the failure in the acquisition of the predetermined information by the second application program and a determination that the user account logged in to the information processing apparatus is the administrator account.

3. The program according to claim 2, wherein in a case where the user account logged in to the information processing apparatus is determined to not be the administrator account, the specific processing is not executed even with the use of the position information service not allowed for the second application program.

4. The program according to claim 1, further causing the computer to function as:
reception means for receiving, using the first application program, the predetermined information acquired by the second application program calling the predetermined API; and
second execution means for executing connection setting processing using the received predetermined information, the connection setting processing being for connecting a communication apparatus outside the information processing apparatus to one network.

5. The program according to claim 4,
wherein the predetermined information acquired by the second application program calling the predetermined API includes a password for one network, and
wherein the connection setting processing includes processing for transmitting information including a password for one network to the communication apparatus.

6. The program according to claim 5, further causing the computer to function as display control means for, in a case where the use of the position information service is not allowed for the second application program despite execution of the specific processing, displaying an input screen for accepting input of a password, and in a case where the use of the position information service is allowed for the second application program after the execution of the specific processing, not displaying the input screen,
wherein in a case where the input screen is displayed, the connection setting processing includes processing for transmitting information including the password input to the input screen to the communication apparatus.

7. The program according to claim 4, wherein the predetermined information to be used in the connection setting processing is acquired by the predetermined API called after whether the acquisition of the predetermined information by the second application program is successful is determined.

8. The program according to claim 4, wherein the predetermined API used in acquiring the predetermined information used to determine whether the acquisition of the predetermined information by the second application program is successful and the predetermined API used in acquiring the predetermined information used in the connection setting processing are different.

9. The program according to claim 4, further causing the computer to function as calling means for calling the predetermined API by the first application program,
wherein the connection setting processing is executed using the predetermined information acquired by the predetermined API called by the first application program as well.

10. The program according to claim 9,
wherein the predetermined information that is used in the connection setting processing and acquired by the first application program calling the predetermined API includes information about a list of wireless networks accessible by the information processing apparatus,
wherein the connection setting processing includes processing for detecting a network formed by the communication apparatus operating in a mode for the connection setting processing from the list of wireless networks accessible by the information processing apparatus, and processing for establishing connection between the network formed by the communication apparatus operating in the mode for the connection setting processing and the information processing apparatus, and
wherein information for connecting the communication apparatus to one network is transmitted to the communication apparatus via the connection between the network formed by the communication apparatus operating in the mode for the connection setting processing and the information processing apparatus.

11. The program according to claim 9,
wherein the predetermined information that is used in the connection setting processing and acquired by the first application program calling the predetermined API includes information about a network to which the information processing apparatus is connected via a wireless LAN upon calling the predetermined API, and
wherein the connection setting processing includes processing for transmitting information about the network to which the information processing apparatus is connected via the wireless LAN upon calling the predetermined API to the communication apparatus.

12. The program according to claim 9, further causing the computer to function as:
third determination means for determining whether acquisition of the predetermined information by the first application program calling the predetermined API is successful; and
third execution means for not executing predetermined processing based on a success in the acquisition of the predetermined information by the first application program and executing the predetermined processing based on a failure in the acquisition of the predetermined information by the first application program, the predetermined processing being for having the user perform an operation for allowing the use of the position information service for the first application program,
wherein in a case where the use of the position information service is allowed for the first application program, the first application program calling the predetermined API is able to acquire the predetermined information, and
wherein in a case where the use of the position information service is not allowed for the first application program, the first application program calling the predetermined API is not able to acquire the predetermined information.

13. The program according to claim 12, wherein the predetermined API used in acquiring the predetermined information used to determine whether the acquisition of the predetermined information by the first application program is successful and the predetermined API used in acquiring the predetermined information used in the connection setting processing are different.

14. An information processing apparatus including a first application program, the information processing apparatus comprising:
instruction means for instructing a second application program different from the first application program to call a predetermined API for acquiring predetermined information from an OS of the information processing apparatus, the predetermined information being acquired by the information processing apparatus using a wireless LAN function;
first determination means for determining whether acquisition of the predetermined information by the second application program calling the predetermined API is successful; and
first execution means for not executing specific processing based on a success in the acquisition of the predetermined information by the second application program and executing the specific processing based on a failure in the acquisition of the predetermined information by the second application program, the specific processing being for having a user perform an operation for allowing use of position information service for the second application program,
wherein in a case where the use of the position information service is allowed for the second application program, the second application program calling the predetermined API is able to acquire the predetermined information, and
wherein in a case where the use of the position information service is not allowed for the second application program, the second application program calling the predetermined API is not able to acquire the predetermined information.

15. A control method of an information processing apparatus including a first application program, the control method comprising:
instructing a second application program different from the first application program to call a predetermined API for acquiring predetermined information from an OS of the information processing apparatus, the predetermined information being acquired by the information processing apparatus using a wireless LAN function;
determining, in first determining, whether acquisition of the predetermined information by the second application program calling the predetermined API is successful; and
in first executing, not executing specific processing based on a success in the acquisition of the predetermined information by the second application program and executing the specific processing based on a failure in the acquisition of the predetermined information by the second application program, the specific processing being for having a user perform an operation for allowing use of position information service for the second application program,
wherein in a case where the use of the position information service is allowed for the second application program, the second application program calling the predetermined API is able to acquire the predetermined information, and
wherein in a case where the use of the position information service is not allowed for the second application program, the second application program calling the predetermined API is not able to acquire the predetermined information.
